# FASCICULE DE BREVET EUROPEEN

(11) **EP 3 276 514 B1**
(45) Date de publication et mention de la délivrance du brevet: **27.01.2021**
(21) Numéro de dépôt: 17183214.0
(22) Date de dépôt: 26.07.2017
(51) Int. Cl.: B64C 1/00, B64C 27/82, B64C 27/06, B64F 5/00, G06F 30/20, G06F 113/28

(54) **PROCEDE D OPTIMISATION DES SECTIONS D'UNE POUTRE DE QUEUE DESTINEE A UN AERONEF A VOILURE TOURNANTE**
VERFAHREN ZUR OPTIMIERUNG VON ABSCHNITTEN EINES HECKROHRS FÜR EIN DREHFLÜGELFLUGZEUG
A METHOD OF OPTIMIZING SECTIONS OF A TAIL BOOM FOR A ROTARY WING AIRCRAFT

(30) Priorité: 28.07.2016 FR 1601160
(43) Date de publication de la demande: 31.01.2018
(73) Titulaire: Airbus Helicopters, 13725 Marignane Cedex (FR)
(72) Inventeur: ALFANO, David, 13880 VELAUX (FR); LEGRAS, Guillaume, 13250 SAINT CHAMAS (FR); LEUSINK, Debbie, 29260 Lesneven (FR)
(74) Mandataire: GPI & Associés

(56) Documents cités:
- US-A1- 2012 280 079
- T. Sreekanta Murthy: "Investigation on the Use of Optimization Techniques for Helicopter Airframe Vibrations Design Studies", Control and Dynamic Systems V54: System Performance Improvement and Optimization Techniques and Their Applications in Aerospace Systems, 1 janvier 1993 (1993-01-01), pages 225-261, XP055375074, Extrait de l'Internet: URL:https://ebookcentral.proquest.com/lib/ epo-ebooks/detail.action?docID=1192746# [extrait le 2017-05-22]
- Henry L. Kelley ET AL: "Two-Dimensional Aerodynamic Characteristics of Several Polygon-Shaped Cross-Sectional Models Applicable to Helicopter Fuselages", NASA Technical paper 3233 AVSCOM Technical report 92-B-002, 1 août 1992 (1992-08-01), pages 1-34, XP055097457, Extrait de l'Internet: URL:http://www.dtic.mil/get-tr-doc/pdf?Loc ation=U2&doc=GetTRDoc.pdf&AD=ADA254938 [extrait le 2014-01-21]
- Ioannis A. Raptis ET AL: "Simplified Rotor Dynamics" In: "Linear and Nonlinear Control of Small-Scale Unmanned Helicopters", 1 janvier 2011 (2011-01-01), Springer Netherlands, Dordrecht, XP055377109, ISSN: 2213-8986 ISBN: 978-94-007-0023-9 vol. 45, pages 31-46, DOI: 10.1007/978-94-007-0023-9_4, * section 4.8 * * page 31 - page 34 * * page 44 - page 46 * * le document en entier *
- András Sóbester ET AL: "Aircraft Aerodynamic Design", , 1 janvier 2015 (2015-01-01), XP055375378, ISBN: 978-0-470-66257-1 Extrait de l'Internet: URL:https://www.researchgate.net/file.Post FileLoader.html?id=575daec2217e200b803536e 7&assetKey=AS:372227565473792@146575737531 1 [extrait le 2017-05-23]
- Sung-Ling Twu ET AL: "CONFIGURATION DESIGN SENSITIVITY ANALYSIS OF BUILT-UP STRUCTURES PART II: NUMERICAL METHOD", INTERNATlONAL JOURNAL FOR NUMERICAL METHODS IN ENGINEERING, 1 January 1993 (1993-01-01), pages 4201-4222, XP055567505, Retrieved from the Internet: URL:https://onlinelibrary.wiley.com/doi/pd f/10.1002/nme.1620362407 [retrieved on 2019-03-12]

## Description

La présente invention est du domaine des éléments de fuselage d'un aéronef et d'un aéronef à voilure tournante en particulier. La présente invention concerne un procédé d'optimisation des sections d'une poutre de queue destinée à un aéronef à voilure tournante ainsi qu'une poutre de queue ainsi obtenue et un aéronef muni d'une telle poutre de queue.

Les aéronefs à voilures tournantes sont des appareils volants qui se distinguent principalement des autres aéronefs motorisés par leur capacité à évoluer aussi bien en vol de croisière à vitesses élevées qu'en vol à basses vitesses et en particulier en vol stationnaire. Une telle capacité est procurée par l'exploitation d'au moins une voilure tournante à axe de rotation sensiblement vertical équipant l'aéronef. Une telle voilure tournante est située au dessus d'un fuselage de l'aéronef et est désignée par l'expression « rotor principal ». Le rotor principal comporte une pluralité de pales et est entrainé en rotation par une motorisation de l'aéronef. Ce rotor principal assure au moins partiellement la sustentation et la propulsion de l'aéronef.

Un aéronef à voilure tournante est généralement caractérisé par trois directions privilégiées, une direction longitudinale X s'étendant de l'avant de l'aéronef vers l'arrière de l'aéronef, une direction d'élévation Z s'étendant de bas en haut perpendiculairement à la direction longitudinale X et une direction transversale Y s'étendant de gauche à droite perpendiculairement aux directions longitudinale X et d'élévation Z.

La direction longitudinale X est l'axe de roulis de l'aéronef, la direction transversale Y est son axe de tangage et la direction d'élévation Z est son axe de lacet. L'axe de rotation du rotor principal est sensiblement proche de l'axe de lacet de l'aéronef.

Pour assurer son équilibre autour de l'axe de lacet, l'aéronef est doté d'un dispositif anticouple créant un couple autour de cet axe de lacet. Ce couple permet d'une part de s'opposer et d'équilibrer le couple rotor et d'autre part d'assurer la manœuvrabilité de l'aéronef autour de l'axe de lacet, notamment en vol stationnaire.

Diverses configurations de dispositifs anticouple existent pour les aéronefs à voilures tournantes.

Par exemple, un dispositif anticouple est constitué par un rotor auxiliaire situé généralement à l'arrière de l'aéronef, à l'extrémité d'une poutre de queue de l'aéronef. Ce rotor auxiliaire est entrainé en rotation par la motorisation de l'aéronef. Un dispositif anticouple peut également être constitué par un jet d'air orienté principalement selon la direction transversale Y et généralement situé à l'extrémité ou le long de la poutre de queue de l'aéronef. Selon ces deux exemples, le dispositif anticouple crée un effort transversal au niveau de la poutre de queue de l'aéronef générant par la suite un couple autour de l'axe de lacet.

Selon un autre exemple, un dispositif anticouple est constitué par deux hélices situées transversalement de part et d'autre du fuselage de l'aéronef. Ces deux hélices sont entrainées en rotation par la motorisation de l'aéronef et créent des efforts longitudinaux. Ces deux hélices assurent ainsi partiellement ou totalement la propulsion de l'aéronef, selon la phase de vol de l'aéronef. Une différence entre les efforts longitudinaux créés respectivement par chaque hélice permet de générer un couple autour de l'axe de lacet.

Quel que soit le dispositif anticouple utilisé, il est nécessaire de fournir à ce dispositif anticouple une puissance mécanique afin de créer le couple requis. Cette puissance mécanique entraînant le dispositif anticouple vient s'ajouter à la puissance mécanique nécessaire pour entraîner en rotation le rotor principal. La motorisation de l'aéronef doit alors fournir une puissance mécanique suffisante pour entraîner simultanément le rotor principal et le dispositif anticouple.

En outre, l'aéronef comporte une cellule centrale constituant le fuselage et portant le rotor principal. Cette cellule centrale est prolongée par une poutre de queue qui s'étend longitudinalement vers l'arrière de l'aéronef, sensiblement le long d'un plan antéropostérieur de symétrie de l'aéronef. Cette poutre de queue peut porter le dispositif anticouple, par exemple un rotor auxiliaire ainsi que des éléments aérodynamiques tels qu'une dérive verticale et un empennage horizontal permettant d'assurer la stabilité de l'aéronef.

De plus, la poutre de queue s'étend longitudinalement sur une longueur maximale et selon la direction d'élévation Z sur une hauteur maximale. Enfin, la poutre de queue s'étend latéralement selon une épaisseur maximale en s'étirant d'un premier flanc vers un deuxième flanc.

La hauteur maximale de la poutre de queue est généralement supérieure à son épaisseur maximale. Toutefois, des configurations particulières de la poutre de queue peuvent imposer que la hauteur maximale soit inférieure ou égale à l'épaisseur maximale, par exemple pour agencer la poutre de queue à une hauteur suffisante vis-à-vis du sol lorsque l'aéronef est au sol ou bien pour des raisons d'intégration de la poutre de queue au fuselage de l'aéronef.

Par suite, la poutre de queue est parfois assimilable à une aile épaisse. En effet, l'épaisseur relative de la poutre de queue est souvent importante et supérieure à 0,2, cette épaisseur relative correspondant au quotient de l'épaisseur maximale par la hauteur maximale.

Cette épaisseur relative est importante pour conférer à la poutre de queue une résistance mécanique et un placement modal suffisant afin de porter les éléments aérodynamiques et le cas échéant le rotor auxiliaire. De plus, une telle épaisseur relative élevée permet de réduire la traînée de la poutre de queue lorsque l'aéronef se déplace latéralement.

En outre, cette épaisseur relative est généralement évolutive le long de la poutre de queue selon la direction longitudinale de l'aéronef. En effet, une poutre de queue est typiquement plus épaisse, à savoir avec une grande épaisseur, au plus proche du fuselage de l'aéronef et s'affine vers l'arrière de l'aéronef, à savoir avec une plus petite épaisseur. Par exemple, une épaisseur relative varie de 130% proche du fuselage jusqu'à 50% à l'extrémité arrière de la poutre de queue.

Dans ces conditions, le flux d'air traversant le rotor principal en rotation peut impacter en vol une portion supérieure de la poutre de queue. Ce flux d'air traversant le rotor principal est dénommé plus simplement « flux d'air » par la suite.

Cette portion supérieure comporte alors un bord d'attaque de cette poutre de queue, au regard du flux d'air. A l'inverse, le bord de fuite est présent dans une portion inférieure de la poutre de queue. Autrement dit, le bord d'attaque de la poutre de queue représente le point le plus haut de la poutre de queue selon la direction d'élévation Z et est en regard du rotor principal, le bord de fuite du profil représentant selon cette direction d'élévation Z la partie basse d'une section du profil dans un plan YZ.

Dès lors, le flux d'air impacte de façon importante la poutre de queue essentiellement durant une phase de vol stationnaire ou bien lors d'une phase de vol à faibles vitesses d'avancement, telle qu'une phase de vol en montée par exemple. De même, ce flux d'air impacte la poutre de queue de façon importante durant des phases de vols latéraux à faibles vitesses.

En effet, durant ces différentes phases de vol, les faibles vitesses de l'air dues aux déplacements de l'aéronef ne sont pas suffisantes pour écarter le flux d'air de la poutre de queue. Typiquement, ces faibles vitesses de l'aéronef sont inférieures à une vitesse limite de l'ordre de 30 à 40 nœuds (30 à 40 kt) selon l'aéronef et sa masse en particulier.

A contrario, à partir d'une vitesse d'avancement longitudinale plus importante, le flux d'air du rotor principal est dévié vers l'arrière par l'air grâce à la vitesse d'avancement de l'aéronef et n'impacte pas ou faiblement la poutre de queue de l'aéronef.

Toutefois, lors des vols latéraux avec une telle vitesse d'avancement supérieure à la vitesse limite, la poutre de queue est impactée par un autre flux d'air généré par le déplacement de l'aéronef et désigné par l'expression « flux infini ».

Lors des phases de vol stationnaire et à faibles vitesses d'avancement, le flux d'air impacte le bord d'attaque de la poutre de queue et se scinde en deux écoulements d'air pour contourner la poutre de queue. Ces deux écoulements d'air circulant ainsi de part et d'autre de la poutre de queue engendrent l'apparition de forces aérodynamiques sur cette poutre de queue. Ces forces aérodynamiques se composent d'une portance aérodynamique selon la direction transversale Y et d'une traînée aérodynamique selon la direction d'élévation Z. Cette portance aérodynamique est désignée par la suite « force latérale » alors que la traînée aérodynamique est désignée « déportance ».

La force latérale tend à déplacer la poutre de queue latéralement et à générer ainsi un couple autour de l'axe de lacet de l'aéronef. Cette force latérale peut alors générer un couple s'ajoutant ou bien s'opposant au couple principal créé par le dispositif anticouple de l'aéronef. Cette force latérale peut donc être bénéfique pour l'aéronef lorsque le couple qu'elle génère s'ajoute au couple principal. Cette force latérale permet alors de réduire la puissance mécanique fournie au dispositif anticouple et, par suite, de mettre à disposition du rotor principal un surplus de puissance mécanique.

Par contre, cette force latérale est pénalisante lorsque le couple qu'elle génère s'oppose au couple principal du dispositif anticouple. Le dispositif anticouple consomme alors plus de puissance mécanique qui n'est plus disponible pour le rotor principal.

L'orientation et l'intensité de cette force latérale est fonction de la forme des sections de la poutre de queue ainsi que de l'intensité et de la direction du flux d'air du rotor principal. En effet, le flux d'air généré par la rotation du rotor principal n'impacte pas la poutre de queue selon une direction purement verticale lors d'un vol stationnaire ou bien lors d'un vol d'avancement à faible vitesse, mais avec une composante verticale et une composante latérale dues à la rotation du rotor principal.

Lors d'un vol latéral de l'aéronef dans le sens de la composante latérale du flux d'air, cette composante latérale peut être partiellement ou totalement annulée voire inversée si la vitesse latérale de l'aéronef est suffisante. A contrario, cette composante latérale du flux d'air peut être amplifiée lorsque ce vol latéral de l'aéronef se déroule dans un sens opposé à cette composante latérale.

Par ailleurs, la déportance tend à déplacer la poutre de queue et, par suite, le fuselage de l'aéronef vers le bas, et s'avère donc pénalisante, cette déportance s'opposant toujours à la portance générée par le rotor principal. Cette déportance tend donc à réduire la vitesse de montée de l'aéronef ainsi que la charge utile de cet aéronef.

En outre, les phases de vol stationnaire et les phases de vol avec une faible vitesse d'avancement, qu'elles soient longitudinales ou bien latérales, sont des phases très exigeantes en termes de puissance. Il est à noter que c'est justement lors de ces phases de vol que le flux d'air du rotor principal génère principalement les forces aérodynamiques sur la poutre de queue.

Il est donc intéressant de limiter les effets pénalisants de ces forces aérodynamiques et de privilégier une force latérale s'ajoutant à l'effet du dispositif anticouple de l'aéronef et/ou de minimiser la déportance. Une puissance maximale peut alors être disponible pour le rotor principal lors de ces phases de vol exigeantes, permettant de ne pas dégrader, voire d'améliorer, les performances de l'aéronef et notamment sa charge utile.

Par ailleurs, le flux d'air étant imposé par la rotation du rotor principal, la géométrie de la poutre de queue est un paramètre permettant de modifier l'intensité et/ou l'orientation de ces forces aérodynamiques. Cependant, une modification de la géométrie de la poutre de queue d'un aéronef pour limiter ces effets pénalisants peut s'avérer complexe et difficile à réaliser.

En effet, la modification des sections de la poutre de queue, selon un plan YZ, ne doit pas nuire à la qualité de vol de l'aéronef, notamment pour ne pas dégrader de manière conséquente le comportement de l'aéronef durant un vol latéral.

Une modification structurale d'une poutre de queue peut aussi modifier son comportement dynamique en induisant des problèmes vibratoires, voire des résonances indues.

De même, la modification d'une poutre de queue ne doit pas dégrader sa faculté à porter des éléments aérodynamiques qui peuvent être lourds, tels qu'une dérive, un empennage et un rotor auxiliaire. La modification d'une poutre par l'ajout d'orifices permettant un écoulement partiel du flux d'air du rotor dans un canal situé dans la poutre de queue, tel que décrit dans le document US 6352220, peut alors être problématique pour la résistance structurelle de la poutre, ainsi que pour le placement modal associé.

L'ajout de surfaces aérodynamiques supplémentaires et pesantes peut également modifier le centrage de l'aéronef et, par suite, modifier son comportement dynamique en vol. Par exemple, le document EP 0099185 décrit une poutre de queue munie d'un déflecteur situé sur le long d'un flanc latéral de la poutre de queue, dans le quart supérieur de cette poutre de queue pour permettre le décollement du flux d'air vis-à-vis de la poutre de queue.

Les documents RU 2281227 et US 5209430 décrivent quant à eux une poutre de queue munie de deux déflecteurs, un déflecteur étant respectivement situé le long d'un flanc latéral de la poutre de queue pour créer un effort latéral.

Le document US 8074920 décrit une poutre de queue munie d'un déflecteur sur sa portion supérieure et d'une ou deux ailettes sur sa portion inférieure pour diriger latéralement le flux d'air.

Ces trois documents décrivent une poutre de queue tendant à contrecarrer le couple induit sur le fuselage de l'aéronef par un rotor principal afin d'améliorer le contrôle en lacet de l'aéronef, mais sans effet positif avéré sur la déportance de la poutre de queue.

Le document US 4809930 décrit une poutre de queue dont la section est ogivale et avec une partie inférieure sensiblement plate. La partie supérieure de la poutre de queue est de plus en plus effilée vers l'arrière de la poutre de queue afin de réduire la déportance tout en améliorant la stabilité latérale de l'aéronef.

Les documents WO 2012/039702 et US 2012/280079 présentent une poutre de queue mince et profilée afin de générer une force latérale tout en minimisant la déportance. Cette poutre de queue peut-être munie d'un volet mobile au bord de fuite afin de modifier notamment la force latérale.

De plus, le document US8985503 décrit l'utilisation de profils asymétriques pour la poutre de queue ainsi que de déflecteurs disposés sur un flanc de la poutre de queue afin d'augmenter la force latérale.

Le document EP 0524044 décrit une poutre de queue intégrant un dispositif anticouple muni de fentes ménagées dans la poutre de queue et alimentées en fluide sous pression. La sortie de ce fluide permet de dévier le flux d'air du rotor principal et agit ainsi de manière sensiblement analogue à un déflecteur.

Par ailleurs, on connaît aussi le document NASA TP3233 "Two-dimensional aerodynamic characteristics of several polygon-shaped cross-sectional models applicable to helicopter fuselages", H.L. Kelley, C.A. Crowelt et J.C. Wilson, 1992, le document NASA TP2000-210083 "Exploratory investigation of aerodynamic characteristics of helicopter tail boom cross-section models with passive venting", D.W. Banks et H.L. Kelley, 2000 et le document NASA TP2506 "Aerodynamic characteristics of several current helicopter tail boom cross sections including the effect of spoilers", J.C. Wilson et H.L. Kelley, 1986. Ces documents décrivent les études en soufflerie de différentes sections d'une poutre de queue pour déterminer l'influence de ces sections sur la déportance et la force latérale générées selon l'incidence du flux d'air balayant la poutre de queue.

Le document NASA TP3233 décrit la comparaison de neuf sections polygonales différentes pour une poutre de queue. Le document NASA TP2000-210083 décrit la comparaison de deux sections de poutres de queue (une section trapézoïdale et une section ovale) comportant des ouvertures permettant l'écoulement partiel du flux d'air du rotor à l'intérieur de la poutre de queue et/ou des déflecteurs. Le document NASA TP2506 décrit la comparaison de trois sections de poutres de queue existantes avec l'utilisation de déflecteurs. La présence de ces déflecteurs permet d'augmenter la force latérale générée tout en augmentant simultanément la déportance.

Le document « Investigation on the Use of Optimization Techniques for Helicopter Airframe Vibrations Design Studies » de T. Sreekanta Murthy, 1993 décrit un procédé d'optimisation du design d'un fuselage d'un aéronef applicable à l'optimisation d'un fuselage d'un aéronef à voilure tournante dont la poutre de queue dans le but de réduire les vibrations générées ou transmises par ce fuselage et cette poutre de queue. Les sections de la poutre de queue peuvent notamment être optimisées en utilisant comme variable de conception la hauteur de chaque section. Ce procédé permet alors d'optimiser les sections d'un modèle préliminaire du fuselage et de la poutre de queue de l'aéronef, ce modèle préliminaire étant préalablement défini et comportant plusieurs sections avec des hauteurs différentes.

Le document « Configuration Design Sensitivity Analysis of Built-Up Structures Part II : Numerical Method » de Sung-Ling Twul• et Kyung K. Choi, 1993, décrit des méthodes de calculs, notamment une méthode de calcul d'une poutre de queue mettant en œuvre une décomposition en éléments finis de la poutre de queue.

Enfin, l'arrière plan technologique de l'invention comporte également les documents « Simplified Rotor Dynamics » de loannis A. Raptis, 2010, et « Aircraft Aerodynamic Design : Geometry and Optimization » de Andras Sobester, 2015.

Dès lors, minimiser la déportance et/ou augmenter la force latérale apparaissant au niveau de la poutre de queue peut s'avérer difficile compte tenu de ces multiples contraintes.

La présente invention a alors pour objet de proposer un procédé d'optimisation des sections d'une poutre de queue selon des critères de performances recherchés. Ce procédé permet de définir une poutre de queue possédant des caractéristiques aérodynamiques adaptées afin de privilégier, au choix du concepteur, une diminution de la déportance ou bien une augmentation de la force latérale générées au niveau de la poutre de queue, voire de combiner une diminution de la déportance et une augmentation de la force latérale au cours d'une phase de vol stationnaire ou bien à faible vitesse d'avancement. En outre, l'invention vise également une poutre de queue comportant de telles caractéristiques aérodynamiques adaptées et un aéronef muni de cette poutre de queue.

Selon l'invention, un procédé d'optimisation des sections d'une poutre de queue destinée à un aéronef à voilure tournante muni d'au moins un rotor principal est défini selon la revendication 1.

Cette poutre de queue s'étend selon une direction longitudinale X de l'aéronef, le long d'un plan antéropostérieur de cet aéronef. Chaque section de la poutre de queue est définie dans un plan perpendiculaire à la direction longitudinale X par une corde c entre un bord d'attaque et un bord de fuite de cette section et par une épaisseur maximale *t* de cette section mesurée perpendiculairement à la corde c.

L'aéronef à voilure tournante est par exemple un aéronef muni d'un rotor principal et d'un dispositif anticouple formé par un rotor auxiliaire agencé à l'extrémité de la poutre de queue. Le dispositif anticouple peut également être formé par deux hélices propulsives agencées de part et d'autre d'un fuselage de l'aéronef.

Le bord d'attaque de chaque section de la poutre de queue est situé en regard du rotor principal, le bord de fuite étant situé en regard du sol lorsque cet aéronef repose sur le sol. Le rotor principal comporte plusieurs pales dont la rotation provoque la circulation d'un flux d'air qui balaye la poutre de queue du bord d'attaque vers le bord de fuite. L'axe de rotation du rotor principal est sensiblement confondu avec l'axe de lacet de l'aéronef.

On a défini précédemment un repère principal orthonormé XYZ attaché à l'aéronef. Un repère secondaire (U,V) est attaché à chaque section de la poutre de queue et situé dans un plan perpendiculaire à la direction longitudinale X. L'axe des abscisses U est défini par la direction de la corde c et l'axe des ordonnées V est défini par la direction de l'épaisseur maximale t.

L'axe des abscisses U et l'axe des ordonnées V peuvent être respectivement parallèles à la direction d'élévation Z et à la direction transversale Y. Toutefois, l'axe des abscisses U et l'axe des ordonnées V peuvent également être inclinés vis-à-vis respectivement des directions d'élévation Z et transversale Y, selon une inclinaison de chaque section de la poutre de queue.

Comme évoqué précédemment, le flux d'air du rotor principal provoque l'apparition de deux forces aérodynamiques, la force latérale et la déportance, au niveau de la poutre de queue. Afin d'améliorer les performances de l'aéronef, il est intéressant de limiter les effets pénalisants de ces forces aérodynamiques et donc de maximiser la force latérale s'ajoutant à l'effet du dispositif anticouple de l'aéronef et/ou de minimiser la déportance.

Il est à noter que l'orientation du couple rotor du rotor principal auquel s'oppose le dispositif anticouple est liée au sens de rotation de ce rotor principal.

En effet, ce couple rotor est dû à la réaction du rotor principal de l'aéronef au couple moteur utilisé pour mettre en rotation ce rotor principal. De fait, ce couple rotor a tendance à faire tourner le fuselage de l'aéronef autour de l'axe de lacet en sens inverse de la rotation du rotor principal.

Par exemple, pour un rotor principal tournant dans le sens anti-trigonométrique selon une vue de dessus, le couple rotor est orienté selon le sens trigonométrique. De fait, le dispositif anticouple doit générer un couple orienté selon le sens anti-trigonométrique et la force latérale doit être donc orientée afin de générer également un couple orienté selon le sens anti-trigonométrique pour s'ajouter à l'effet de ce dispositif anticouple.

Toutefois, diminuer la déportance et augmenter la force latérale sont deux caractéristiques antagonistes. En effet, une diminution de la déportance entraîne généralement une diminution de la force latérale et, inversement, une augmentation de la force latérale entraîne généralement une augmentation de la déportance.

Une maximisation de la force latérale est généralement privilégiée afin de limiter le besoin en puissance au niveau du dispositif anticouple et, par suite, d'augmenter la puissance disponible pour le rotor principal. Cependant, dans certains cas, par exemple pour un aéronef destiné à effectuer beaucoup de vols verticaux de montée, il peut être plus intéressant de minimiser la déportance de la poutre de queue afin de limiter directement le besoin de puissance au niveau du rotor principal.

Ainsi, les sections standards d'une poutre de queue sont définies afin de privilégier une minimisation de la déportance et/ou une maximisation de la force latérale.

En outre, il convient d'augmenter la force latérale dans le bon sens afin que cette maximisation de la force latérale s'ajoute bien à l'effet du dispositif anticouple. En effet, le flux d'air du rotor principal impacte la poutre de queue différemment selon le sens de rotation du rotor principal. En conséquence, la force latérale générée au niveau de la poutre de queue est liée au sens de rotation de ce rotor principal. Il est à noter qu'ainsi, pour une même poutre de queue, une inversion du sens de rotation du rotor principal inverse généralement le sens de la force latérale.

Une poutre de queue d'un aéronef à voilure tournante est traditionnellement symétrique selon un plan antéropostérieur de l'aéronef. Une telle poutre de queue à sections symétriques permet principalement une construction simple de la poutre de queue.

Par ailleurs, une poutre de queue peut être asymétrique et présenter alors un gain aérodynamique intéressant, notamment une augmentation de la force latérale, ainsi qu'une meilleure adaptation de son profil au flux d'air du rotor principal qui impacte la poutre de queue avec une incidence non nulle. Par contre, une telle poutre de queue asymétrique présente également une complexité structurelle et un comportement global de l'aéronef non-linéaire induit par cette dissymétrie.

Avantageusement, le procédé d'optimisation des sections d'une poutre de queue selon l'invention permet de définir aussi bien des sections symétriques et asymétriques. Les comportements d'une poutre de queue asymétrique sont alors différents et non symétriques selon le côté de la poutre de queue sur lequel impacte le flux d'air du rotor principal, en fonction du sens de rotation de ce rotor principal, alors que le comportement d'une poutre de queue symétrique est symétrisé lorsque le sens de rotation du rotor principal est inversé.

De fait, pour répondre à des caractéristiques aérodynamiques et structurelles données, la définition des sections d'une poutre de queue symétrique est identique quel que soit le sens de rotation du rotor principal. Par contre, une poutre de queue asymétrique doit être modifiée par effet miroir par rapport à un plan vertical passant par son bord d'attaque lorsque le sens de rotation du rotor principal est inversé par rapport au sens de rotation ayant abouti à la définition de cette poutre de queue asymétrique.

Les dimensions d'une section standard asymétrique peuvent influencer aussi bien la direction de cette force latérale que les intensités de la force latérale et de la déportance ainsi que la vitesse de vol latérale pour laquelle la direction de cette force latérale est inversée.

Qu'elle soit symétrique et asymétrique, chaque section de la poutre de queue doit en outre respecter des enveloppes dimensionnelles et structurelles de tenue mécanique. Les enveloppes structurelles de tenue mécanique sont généralement définies afin que la poutre de queue supporte l'implantation à son extrémité d'un rotor auxiliaire anticouple et d'un ou plusieurs éléments aérodynamiques tels qu'une dérive verticale et un empennage horizontal, et résiste à un contact avec le sol, lors d'un atterrissage d'urgence en cas d'autorotation par exemple. Les enveloppes dimensionnelles sont quant à elles définies afin de permettre d'une part l'installation d'éléments techniques à l'intérieur de la poutre de queue, tels qu'un arbre d'entrainement du rotor auxiliaire et des éléments de modification du pas des pales de ce rotor auxiliaire, et d'autre part l'implantation de la poutre de queue vis-à-vis de l'architecture de l'aéronef et de son fuselage.

La base de données comporte donc des sections standards symétriques et asymétriques.

De la sorte, la base de données comporte quatre types de sections standards de la poutre de queue, un premier type de sections standards symétriques et un deuxième type de sections standards asymétriques maximisant la force latérale de la poutre de queue ainsi qu'un troisième type de sections standards symétriques et un quatrième type de sections standards asymétriques minimisant la déportance de la poutre de queue.

Ces sections standards sont déterminées suite à des études et/ou des simulations numériques. Les résultats obtenus peuvent également être confirmés et affinés par des essais sur banc, par exemple en soufflerie et/ou en vol.

Ces sections standards sont déterminées suite à des études itératives d'optimisation en aérodynamique. Ces études se basent sur le couplage entre d'une part des simulations en aérodynamique numérique de profils bidimensionnels, permettant l'évaluation des forces aérodynamiques latérales et de déportances sur une géométrie de profil donnée et d'autre part un logiciel d'optimisation basé sur des algorithmes mathématique d'exploration de géométries de profils. Grâce aux informations des forces latérales et de déportances obtenues par l'outil de simulation numérique associées à différentes géométries de profils données, l'outil d'optimisation détermine de nouvelles géométries de profils, construit notamment à partir de courbes de Béziers, qui visent à optimiser les forces latérales et de déportances. Ces nouvelles géométries sont ensuite évaluées avec l'outil de simulation numérique et le processus itératif se répète jusqu'à une optimisation définitive de ces géométries de profils.

Chaque section standard est notamment définie dans le repère secondaire (U,V) par une corde c entre le bord d'attaque et le bord de fuite et par une épaisseur maximale t.

Pour le premier type de sections standards symétriques maximisant la force latérale de la poutre de queue, l'épaisseur maximale t d'une section standard est agencée en aval du milieu de la corde c de la section standard selon le sens d'écoulement du flux d'air du rotor principal. La zone de la poutre de queue proche du bord d'attaque peut alors être mince alors que la zone proche du bord de fuite est la plus épaisse, ce qui est favorable à l'apparition d'une force latérale plus importante, mais également à l'apparition d'une déportance qui peut également être assez importante.

Pour le deuxième type de sections standards asymétriques maximisant la force latérale, l'épaisseur maximale t est agencée à proximité du milieu de la corde c tout en étant en aval de ce milieu de la corde c. Ces sections étant asymétriques, les deux côtés latéraux du profil ont des courbures différentes permettant ainsi de générer des répartitions de pression différentes de part et d'autre du profil et, par suite, la force latérale recherchée.

Par exemple, un premier côté a une courbure importante afin de permettre une bonne accélération du flux d'air le balayant et donc une dépression. Pour le second côté, la courbure du profil doit être cassée, voire avoir une forme sensiblement plate afin d'avoir une bonne surface d'appui en surpression. La différence de pression entre les deux côtés est ainsi maximisée de sorte à maximiser la force latérale.

Pour le troisième type de sections standards symétriques et le quatrième type de sections standards asymétriques minimisant la déportance de la poutre de queue, l'épaisseur maximale *t* est agencée en amont du milieu de la corde c selon le sens d'écoulement du flux d'air. La zone de la poutre de queue proche du bord de fuite peut alors être mince alors que la zone proche du bord d'attaque est la plus épaisse, ce qui est favorable à l'apparition d'une déportance relativement faible, mais également à l'apparition d'une force latérale qui peut également être assez faible.

En d'autres termes, le flux d'air circulant autour de chaque section de la poutre de queue du bord d'attaque vers le bord de fuite, l'épaisseur maximale t d'une section standard est agencée en aval du milieu de la corde c selon le sens d'écoulement du flux d'air lorsque cette épaisseur maximale t se situe entre le milieu de la corde c et le bord de fuite selon l'axe des abscisses U.

De même, l'épaisseur maximale t d'une section standard est agencée en amont du milieu de la corde c selon le sens d'écoulement du flux d'air lorsque cette épaisseur maximale t se situe entre le milieu de la corde c et le bord d'attaque selon l'axe des abscisses U.

Par ailleurs, on considère que l'épaisseur maximale t, également désigné « maître couple », est agencée à proximité du milieu de la corde c lorsque cette épaisseur maximale t est située à une faible distance de ce milieu de la corde c. Cette faible distance est par exemple de l'ordre de 25% de la corde c de la poutre de queue.

En outre, le rapport *t*/*c* de l'épaisseur maximale *t* d'une section d'une poutre de queue par la corde c de cette section caractérise l'épaisseur relative de cette section de la poutre de queue et est généralement évolutif le long d'une poutre de queue d'un aéronef selon la direction longitudinale X. Ce rapport *t*/*c* diminue généralement de la jonction de la poutre de queue avec le fuselage de l'aéronef vers l'extrémité arrière de la poutre de queue. Ce rapport *t*/*c* caractérise entre autres la rigidité et la tenue structurelle d'une poutre de queue. Ce rapport *t*/*c* peut également être influencé par l'architecture de l'aéronef, tel qu'une poutre de queue haute vis-à-vis du sol, qui impose une corde *c* faible et en conséquence une épaisseur maximale *t* importante pour obtenir une tenue structurelle suffisante.

Par ailleurs, ce rapport *t*/*c* peut être très différent d'un aéronef à un autre aéronef.

Les sections d'une poutre de queue sont donc généralement différentes selon le rapport *t*/*c.* En conséquence, les sections standards définies lors de l'étape de création de la base de données peuvent également être définies en fonction de ce rapport *t*/*c.*

Chaque section standard est définie par des points caractéristiques extrêmes *A0*,*A1*,*A2*,*A3* et des points caractéristiques intermédiaires *A01*,*A02*,*A11*,*A12*,*A21*,*A22*,*A31*,*A32.* Ces points caractéristiques sont définis dans le repère secondaire (U,V) qui est attaché au bord d'attaque de chaque section standard, l'axe des abscisses U étant dirigé du bord d'attaque vers le bord de fuite. Une unité des axes des abscisses U et des ordonnées V est égale à la corde c.

Un premier point caractéristique extrême *A0* est situé au niveau du bord de fuite et de coordonnées (1,0). Un deuxième point caractéristique extrême *A2* est situé au niveau du bord d'attaque et de coordonnées (0,0). De plus, les points caractéristiques extrêmes *A1* et *A3* forment l'épaisseur maximale *t* de la section standard et ont pour ordonnées respectivement *-t*/*(2.c)* et *t*/*(2.c),* l'unité de l'axes des ordonnées V étant la corde *c*. Ces points caractéristiques extrêmes *A1* et *A3* ont de préférence une même abscisse.

Les points caractéristiques extrêmes *A0*,*A1*,*A2*,*A3* sont situés sur le contour de la section standard alors que les points caractéristiques intermédiaires *A01*,*A02*,*A11*,*A12*,*A21*,*A22*,*A31*,*A32* sont des points de construction de ce contour de la section standard. Ainsi, depuis le bord de fuite et le premier point extrême *A0*, le contour de la section standard se dirige vers le point caractéristique intermédiaire *A01* selon une direction définie par les points caractéristiques *A0*,*A01* et atteint le deuxième point caractéristique extrême *A1* selon une direction définie par les points caractéristiques *A02*,*A1.* Ensuite, à partir du deuxième point caractéristique extrême *A1*, le contour se dirige vers le point caractéristique intermédiaire *A11* selon une direction définie par les points caractéristiques *A1*,*A11* et atteint le troisième point caractéristique extrême *A2* selon une direction définie par les points caractéristiques *A12*,*A2.*

De même, à partir du troisième point caractéristique extrême *A2*, le contour de la section standard se dirige vers le point caractéristique intermédiaire *A21* selon une direction définie par les points caractéristiques *A2*,*A21* et atteint le quatrième point caractéristique extrême *A3* selon une direction définie par les points caractéristiques *A22*,*A3.* Enfin, à partir du quatrième point caractéristique extrême *A3*, le contour se dirige vers le point caractéristique intermédiaire *A31* selon une direction définie par les points caractéristiques *A3*,*A31* et revient au premier point caractéristique extrême *A0* selon une direction définie par les points caractéristiques *A32*,*A0.*

La base de données peut comporter des tableaux définissant tout d'abord des intervalles pour l'abscisse des points caractéristiques extrêmes *A1*,*A3* définis dans le repère secondaire (U,V). Ces tableaux définissent également des intervalles pour une valeur caractéristique de chaque point caractéristique intermédiaire *A01*,*A02*,*A11*,*A12*,*A21*,*A22*,*A31*,*A32.*

Ces valeurs caractéristiques peuvent être l'abscisse des points caractéristiques intermédiaires *A02*,*A11*,*A22*,*A31* ainsi que pour l'ordonnée des points caractéristiques intermédiaires *A01*,*A11*,*A12*,*A32* dans le repère secondaire (U,V).

Ces valeurs caractéristiques peuvent également définir chaque point caractéristique intermédiaire relativement à la distance entre les deux points caractéristiques extrêmes encadrant ce point caractéristique intermédiaire. En conséquence, cette valeur caractéristique doit être multipliée par la distance entre les deux points caractéristiques extrêmes encadrant ce point caractéristique intermédiaire selon l'axe des abscisses pour obtenir l'abscisse des points caractéristiques intermédiaires *A02*,*A11*,*A22*,*A31* dans le repère secondaire (U,V) et par la distance entre les deux points caractéristiques extrêmes encadrant chaque point caractéristique intermédiaire selon l'axe des ordonnées pour obtenir l'ordonnée des points caractéristiques intermédiaires *A11*,*A12*,*A21*,*A32* dans le repère secondaire (U,V).

Par exemple, pour les points caractéristiques intermédiaires *A01* et *A02*, les valeurs caractéristiques de la base de données sont à multiplier par les distances selon respectivement les axes des abscisses U et des ordonnées V entre les deux points caractéristiques extrêmes *A0* et *A1* encadrant ces points caractéristiques intermédiaires *A01* et *A02.*

Ces intervalles sont définis pour chaque type de sections standards et selon le rapport *t*/*c* et sont bornés par une valeur basse et une valeur haute.

Les sections standards symétriques des premier et troisième types sont indépendantes du sens de rotation du rotor principal. Par contre, les sections standards asymétriques des second et quatrième types sont différentes selon le sens de rotation du rotor principal. Ainsi, une section standard définie pour un rotor principal tournant dans le sens trigonométrique selon une vue de dessus doit être symétrisée par rapport à l'axe des ordonnées V afin de définir une section standard équivalente pour un rotor principal tournant dans le sens anti-trigonométrique.

Les coordonnées de ces points caractéristiques non contenues dans la base de données, par exemple, l'abscisse du point caractéristique intermédiaire *A01* et l'ordonnée du point caractéristique intermédiaire *A02*, peuvent être définies par le concepteur et/ou être imposées par des contraintes de fabrication.

Toutefois, les coordonnées de ces points caractéristiques non contenues dans la base de données sont de préférence imposées par des contraintes de tangence au niveau de chaque point caractéristique extrême *A0*,*A1*,*A2*,*A3.* La coordonnée manquante de chaque point caractéristique intermédiaire est ainsi égale à cette coordonnée de chaque point caractéristique extrême adjacent à ce point caractéristique intermédiaire.

De la sorte, les ordonnées des points caractéristiques intermédiaires *A02*, A*11* sont égales à l'ordonnée du point caractéristique extrême *A1* alors que les ordonnées des points caractéristiques intermédiaires *A22*, *A31* sont égales à l'ordonnée du point caractéristique extrême *A3.* De même, les abscisses des points caractéristiques intermédiaires *A01*, *A32* sont égales à l'abscisse du point caractéristique extrême *A0* et les abscisses des points caractéristiques intermédiaires *A12*, *A21* sont égales à l'abscisse du point caractéristique extrême *A2.*

Avantageusement, le contour de la section standard est alors continu en tangence.

Le contour de chaque section de la poutre de queue est formé en reliant les points caractéristiques extrêmes *A0*,*A1*,*A2*,*A3* par des courbes de Bézier d'ordre 4, les points caractéristiques intermédiaires *A01*,*A02*,*A11*,*A12*,*A21*,*A22*,*A31*,*A32* étant des points de construction de chaque courbe de Bézier. De la sorte, le contour de chaque section de la poutre de queue est défini, par quatre courbes de Bézier reliant respectivement deux points caractéristiques extrêmes, tout d'abord les points caractéristiques extrêmes *A0*,*A1*, puis les points caractéristiques extrêmes *A1*,*A2*, ensuite les points caractéristiques extrêmes *A2*,*A3* et enfin les points caractéristiques extrêmes *A3*,*A0.*

Cependant, le contour de chaque section de la poutre de queue peut également être formé en reliant les points caractéristiques extrêmes par d'autres types de courbes, telle une courbe de Bézier d'ordre différent ou bien une courbe polynomiale.

Ainsi, la base de données comporte par exemple les tableaux suivants caractérisant les sections standards pour un rotor principal tournant dans le sens trigonométrique selon une vue de dessus. Les abscisses dans le repère secondaire U,V sont identifiées par la lettre « u » et les ordonnées par la lettre « v ».

Les coordonnées de ces points caractéristiques non contenues dans la base de données sont imposées par des contraintes liées à l'épaisseur maximale *t* de la section pour les ordonnées des points caractéristiques extrêmes *A1*,*A3* comme évoqué précédemment et peuvent être imposées par des contraintes de conception, fabrication ou bien de tangence pour les points caractéristiques intermédiaires.

De plus, les valeurs caractéristiques de ces points caractéristiques intermédiaires sont définies relativement à la distance entre les deux points caractéristiques extrêmes encadrant chaque point caractéristique intermédiaire pour les tableaux suivants.

La base de données comporte le premier tableau suivant pour le premier type de sections standards symétriques maximisant la force latérale de la poutre de queue :

| t/c | valeur | uA1,uA3 | vA01 | uA02 | uA11 | vA12 | vA21 | uA22 | uA31 | vA32 |
|---|---|---|---|---|---|---|---|---|---|---|
| 50% | basse | 0,55 | 0,6 | 0,1 | 0,6 | 0,08 | -0,08 | 0,6 | 0,1 | -0,6 |
| | haute | 0,95 | 0,95 | 0,25 | 0,95 | 0,25 | -0,25 | 0,95 | 0,25 | -0,95 |
| 60% | basse | 0,55 | 0,6 | 0,1 | 0,6 | 0,08 | -0,08 | 0,6 | 0,1 | -0,6 |
| | haute | 0,95 | 0,95 | 0,25 | 0,95 | 0,25 | -0,25 | 0,95 | 0,25 | -0,95 |
| 70% | basse | 0,55 | 0,6 | 0,08 | 0,6 | 0,08 | -0,08 | 0,6 | 0,08 | -0,6 |
| | haute | 0,95 | 0,95 | 0,4 | 0,95 | 0,25 | -0,25 | 0,95 | 0,4 | -0,95 |
| 80% | basse | 0,55 | 0,6 | 0,1 | 0,6 | 0,08 | -0,08 | 0,6 | 0,1 | -0,6 |
| | haute | 0,95 | 0,95 | 0,25 | 0,95 | 0,25 | -0,25 | 0,95 | 0,25 | -0,95 |
| 90% à 130% | basse | 0,55 | 0,6 | 0,1 | 0,6 | 0,08 | -0,08 | 0,6 | 0,1 | -0,6 |
| | haute | 0,99 | 0,95 | 0,25 | 0,95 | 0,25 | -0,25 | 0,95 | 0,25 | -0,95 |

La base de données comporte le deuxième tableau suivant pour le deuxième type de sections standards asymétriques maximisant la force latérale de la poutre de queue :

| t/c | valeur | uA1,uA3 | vA01 | uA02 | uA11 | vA12 | vA21 | uA22 | uA31 | vA32 |
|---|---|---|---|---|---|---|---|---|---|---|
| 50% | basse | 0,45 | 0,08 | 0,6 | 0,08 | 0,6 | -0,6 | 0,08 | 0,25 | -0,1 |
| | haute | 0,75 | 0,25 | 0,95 | 0,25 | 0,95 | -0,95 | 0,25 | 0,45 | -0,3 |
| 60% | basse | 0,45 | 0,08 | 0,6 | 0,08 | 0,6 | -0,6 | 0,08 | 0,6 | -0,1 |
| | haute | 0,75 | 0,25 | 0,95 | 0,25 | 0,95 | -0,95 | 0,25 | 0,95 | -0,3 |
| 70% | basse | 0,45 | 0,08 | 0,6 | 0,08 | 0,6 | -0,6 | 0,08 | 0,6 | -0,1 |
| | haute | 0,75 | 0,25 | 0,95 | 0,25 | 0,95 | -0,95 | 0,25 | 0,95 | -0,3 |
| 80% | basse | 0,45 | 0,08 | 0,6 | 0,08 | 0,6 | -0,6 | 0,08 | 0,6 | -0,1 |
| | haute | 0,75 | 0,25 | 0,95 | 0,25 | 0,95 | -0,95 | 0,25 | 0,95 | -0,3 |
| 90% à 130% | basse | 0,5 | 0,1 | 0,6 | 0,08 | 0,6 | -0,6 | 0,08 | 0,6 | -0,1 |
| | haute | 0,99 | 0,6 | 0,95 | 0,25 | 0,95 | -0,95 | 0,25 | 0,95 | -0,3 |

La base de données comporte le troisième tableau suivant pour le troisième type de sections standards symétriques minimisant la déportance de la poutre de queue :

| t/c | valeur | uA1,uA3 | vA01 | uA02 | uA11 | vA12 | vA21 | uA22 | uA31 | vA32 |
|---|---|---|---|---|---|---|---|---|---|---|
| 50% | basse | 0,2 | 0,5 | 0,1 | 0,2 | 0,1 | -0,1 | 0,2 | 0,1 | -0,5 |
| | haute | 0,5 | 0,9 | 0,4 | 0,4 | 0,4 | -0,4 | 0,4 | 0,4 | -0,9 |
| 60% | basse | 0,2 | 0,5 | 0,1 | 0,3 | 0,1 | -0,1 | 0,3 | 0,1 | -0,5 |
| | haute | 0,5 | 0,9 | 0,4 | 0,7 | 0,4 | -0,4 | 0,7 | 0,4 | -0,9 |
| 70% | basse | 0,2 | 0,5 | 0,1 | 0,3 | 0,1 | -0,1 | 0,3 | 0,1 | -0,5 |
| | haute | 0,5 | 0,9 | 0,4 | 0,7 | 0,4 | -0,4 | 0,7 | 0,4 | -0,9 |
| 80% | basse | 0,2 | 0,5 | 0,1 | 0,4 | 0,1 | -0,1 | 0,4 | 0,1 | -0,5 |
| | haute | 0,5 | 0,9 | 0,4 | 0,7 | 0,4 | -0,4 | 0,7 | 0,4 | -0,9 |
| 90% à 130% | basse | 0,2 | 0,5 | 0,1 | 0,7 | 0,1 | -0,1 | 0,7 | 0,1 | -0,5 |
| | haute | 0,5 | 0,9 | 0,4 | 0,95 | 0,4 | -0,4 | 0,95 | 0,4 | -0,9 |

Enfin, la base de données comporte le quatrième tableau suivant pour le quatrième type de sections standards asymétriques minimisant la déportance de la poutre de queue :

| valeur | uA1,uA3 | vA01 | uA02 | uA11 | vA12 | vA21 | uA22 | uA31 | vA32 |
|---|---|---|---|---|---|---|---|---|---|
| basse | 0,2 | 0,1 | 0,55 | 0,1 | 0,65 | -0,65 | 0,1 | 0,65 | -0,1 |
| haute | 0,5 | 0,3 | 0,85 | 0,4 | 0,9 | -0,9 | 0,25 | 0,9 | -0,3 |

Ces valeurs sont, pour ce quatrième type de sections standards, indépendantes du rapport *t*/*c.*

En outre, des valeurs préférées permettant d'optimiser l'effort latéral ou bien la déportance pour chaque section standard sont extraites de ces tableaux pour chaque type de sections standards.

Ainsi, pour le premier type de sections standards symétriques, les valeurs préférées sont :

| t/c | uA1,uA3 | vA01 | uA02 | uA11 | vA12 | vA21 | uA22 | uA31 | vA32 |
|---|---|---|---|---|---|---|---|---|---|
| 50% | 0,75 | 0,8 | 0,15 | 0,8 | 0,15 | -0,15 | 0,8 | 0,15 | -0,8 |
| 60% | 0,77 | 0,8 | 0,15 | 0,8 | 0,15 | -0,15 | 0,8 | 0,15 | -0,8 |
| 70% | 0,85 | 0,8 | 0,15 | 0,8 | 0,15 | -0,15 | 0,8 | 0,15 | -0,8 |
| 80% | 0,85 | 0,8 | 0,15 | 0,8 | 0,15 | -0,15 | 0,8 | 0,15 | -0,8 |
| 90% à 130% | 0,85 | 0,8 | 0,15 | 0,8 | 0,15 | -0,15 | 0,8 | 0,15 | -0,8 |

Pour le deuxième type de sections standards asymétriques, les valeurs préférées sont :

| t/c | uA1, uA3 | vA01 | uA02 | uA11 | vA12 | vA21 | uA22 | uA31 | vA32 |
|---|---|---|---|---|---|---|---|---|---|
| 50% | 0,65 | 0,15 | 0,85 | 0,15 | 0,8 | -0,8 | 0,15 | 0,35 | -0,2 |
| 60% | 0,6 | 0,15 | 0,85 | 0,15 | 0,8 | -0,8 | 0,15 | 0,8 | -0,2 |
| 70% | 0,6 | 0,15 | 0,85 | 0,15 | 0,8 | -0,8 | 0,15 | 0,8 | -0,2 |
| 80% | 0,6 | 0,15 | 0,85 | 0,15 | 0,8 | -0,8 | 0,15 | 0,8 | -0,2 |
| 90% à 130% | 0,9 | 0,4 | 0,85 | 0,15 | 0,8 | -0,8 | 0,15 | 0,8 | -0,2 |

Pour le troisième type de sections standards symétriques, les valeurs préférées sont :

| t/c | uA1, uA3 | vA01 | uA02 | uA11 | vA12 | vA21 | uA22 | uA31 | vA32 |
|---|---|---|---|---|---|---|---|---|---|
| 50% | 0,3 | 0,7 | 0,2 | 0,3 | 0,25 | -0,25 | 0,3 | 0,2 | -0,7 |
| 60% | 0,3 | 0,7 | 0,2 | 0,5 | 0,25 | -0,25 | 0,5 | 0,2 | -0,7 |
| 70% | 0,3 | 0,7 | 0,2 | 0,5 | 0,25 | -0,25 | 0,5 | 0,2 | -0,7 |
| 80% | 0,3 | 0,7 | 0,2 | 0,55 | 0,25 | -0,25 | 0,55 | 0,2 | -0,7 |
| 90% à 130% | 0,3 | 0,7 | 0,2 | 0,8 | 0,25 | -0,25 | 0,8 | 0,2 | -0,7 |

Enfin, pour le quatrième type de sections standards asymétriques, les valeurs préférées sont :

| uA1, uA3 | vA01 | uA02 | uA11 | vA12 | vA21 | uA22 | uA31 | vA32 |
|---|---|---|---|---|---|---|---|---|
| 0,35 | 0,15 | 0,7 | 0,2 | 0,8 | -0,8 | 0,2 | 0,8 | -0,15 |

Lors de ce procédé d'optimisation des sections d'une poutre de queue, une étape d'établissement des caractéristiques aérodynamiques et structurelles recherchées de la poutre de queue est effectuée.

Les caractéristiques aérodynamiques recherchées définissent notamment les besoins de l'aéronef en termes de force latérale et/ou de déportance engendrées par le flux d'air du rotor principal circulant sur la poutre de queue en fonction de la destination de l'aéronef et de ses missions principales. Par exemple, le besoin d'un aéronef destiné à effectuer beaucoup de vols verticaux de montée est notamment de minimiser la déportance. De même, le besoin d'un aéronef destiné à effectuer beaucoup de vols stationnaires et latéraux est de maximiser la force latérale.

Les caractéristiques structurelles recherchées définissent notamment les besoins de l'aéronef en termes de rigidité et de tenue mécanique ainsi qu'en termes d'implantation de la poutre de queue, en particulier sa position vis-à-vis du fuselage de l'aéronef et du sol. Ces caractéristiques structurelles recherchées définissent ainsi des enveloppes dimensionnelles et structurelles de tenue mécanique pour la poutre de queue et permettent de déterminer des dimensions générales de la poutre de queue et des épaisseurs relative *t*/*c* pour différentes sections longitudinales de la poutre de queue.

Enfin, lors de ce procédé d'optimisation des sections d'une poutre de queue, une étape de définition des sections de la poutre de queue est réalisée. Cette définition des sections est effectuée en fonction des sections standards de la base de données et des caractéristiques aérodynamiques et structurelles recherchées de la poutre de queue afin d'optimiser ces sections.

Par ailleurs, il est à noter que les sections standards ne comportent aucun appendice aérodynamique, tel un déflecteur ou une ailette, capable de modifier l'écoulement du flux d'air autour de la poutre de queue et, par suite, de modifier les forces aérodynamiques apparaissant au niveau de la poutre de queue.

Toutefois, de tels appendices peuvent être agencés sur une poutre de queue définie selon le procédé d'optimisation des sections d'une poutre de queue selon l'invention afin d'augmenter la force latérale et/ou de diminuer la déportance de façon plus conséquente.

En outre, dans le cas où un rotor auxiliaire est situé à l'extrémité de la poutre de queue, l'arbre d'entrainement de ce rotor auxiliaire est agencé à l'intérieur de la poutre de queue. De fait, aucun capot de protection de cet arbre d'entrainement n'est nécessaire au sommet de la poutre de queue contrairement à une majorité de poutres de queue utilisées traditionnellement. Cette absence de capot de protection de l'arbre d'entrainement favorise de bonnes performances aérodynamiques pour la poutre de queue.

L'invention et ses avantages apparaîtront avec plus de détails dans le cadre de la description qui suit avec des exemples donnés à titre illustratif en référence aux figures annexées qui représentent :
- les figures 1 et 2, deux vues de dessus d'un aéronef à voilure tournante,
- la figure 3, une vue de l'écoulement du flux d'air autour de la poutre de queue,
- la figure 4, un schéma synoptique d'un procédé d'optimisation des sections d'une poutre de queue, et
- la figure 5, un exemple d'une section d'une poutre de queue.

Les éléments présents dans plusieurs figures distinctes sont affectés d'une seule et même référence.

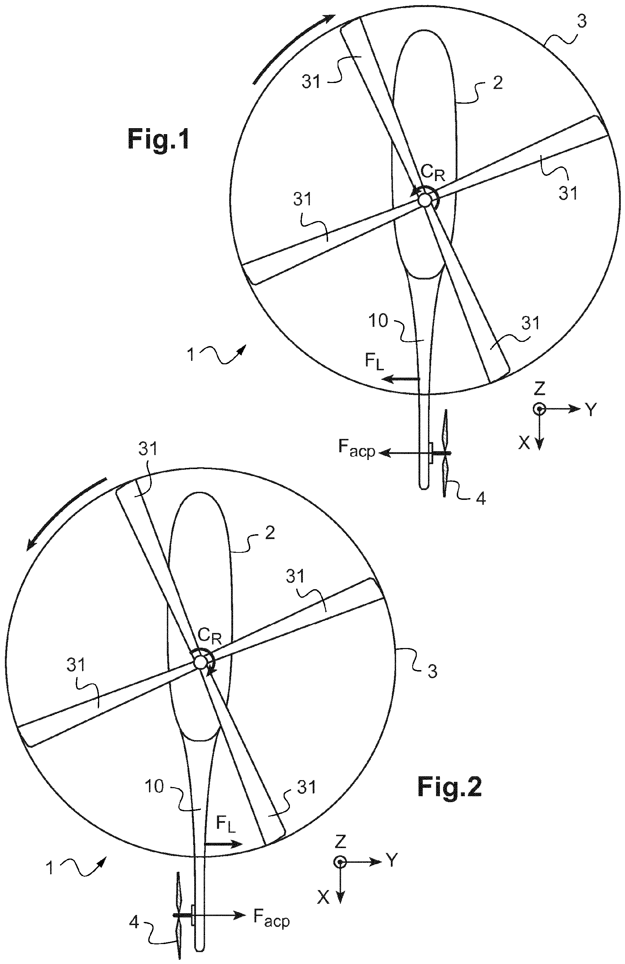

Sur les figures 1 et 2, un aéronef 1 à voilure tournante est représenté en vue de dessus. Cet aéronef 1 comporte un fuselage 2, une poutre de queue 10, un rotor principal 3 et un rotor auxiliaire anticouple 4.

Un repère principal (X,Y,Z) est attaché à cet aéronef 1. La direction longitudinale X s'étend de l'avant de l'aéronef 1 vers l'arrière de l'aéronef 1 et la direction transversale Y s'étend de gauche à droite perpendiculairement à la direction longitudinale X. La direction d'élévation Z s'étend alors de bas en haut et est perpendiculaire aux directions longitudinale X et transversale Y.

La direction longitudinale X est l'axe de roulis de l'aéronef 1, la direction transversale Y est l'axe de tangage et la direction d'élévation Z est l'axe de lacet.

Le rotor principal 3 est positionné au-dessus du fuselage 2 et a un axe de rotation sensiblement vertical, c'est-à-dire sensiblement parallèle à la direction d'élévation Z. Le rotor principal 3 est muni de quatre pales principales 31 entrainées en rotation par une installation motrice de l'aéronef 1 et assure la propulsion voire la sustentation de l'aéronef 1.

La poutre de queue 10 est liée au fuselage 2 et s'étend selon la direction longitudinale X à partir du fuselage 2 et vers l'arrière de l'aéronef 1.

Le rotor auxiliaire 4 est positionné à l'extrémité libre de la poutre de queue 10 et son axe de rotation est sensiblement horizontal, parallèlement à la direction transversale Y. Le rotor auxiliaire 4 est également entrainé en rotation par l'installation motrice de l'aéronef 1.

Selon la figure 1, le rotor principal 3 tourne selon le sens anti-trigonométrique et un couple rotor C_{R} orienté selon le sens trigonométrique est alors appliqué sur le fuselage 2 autour de l'axe de rotation du rotor principal 3. Afin d'équilibrer ce couple rotor C_{R}, le rotor auxiliaire 4 génère un effort transversal F_{acp} dirigé vers la gauche du fuselage 2 qui crée un couple principal s'opposant au couple rotor C_{R}.

De plus, la poutre de queue 10 est balayée par le flux d'air généré par le rotor principal 3 en rotation dans le sens anti-trigonométrique et, par suite, génère une force aérodynamique latérale F_{L} dirigée vers la gauche du fuselage 2 créant ainsi un couple s'ajoutant au couple principal.

Selon la figure 2, le rotor principal 3 tourne selon le sens trigonométrique et un couple rotor C_{R} orienté dans le sens anti-trigonométrique est alors appliqué sur le fuselage 2 autour de l'axe de rotation du rotor principal 3. Afin d'équilibrer ce couple rotor C_{R}, le rotor auxiliaire 4 génère un effort transversal F_{acp} dirigé vers la droite du fuselage 2 qui crée un couple principal s'opposant au couple rotor C_{R}.

De plus, la poutre de queue 10 est balayée par le flux d'air généré par le rotor principal 3 en rotation dans le sens trigonométrique et, par suite, génère une force aérodynamique latérale F_{L} dirigée vers la droite du fuselage 2 créant ainsi un couple s'ajoutant au couple principal.

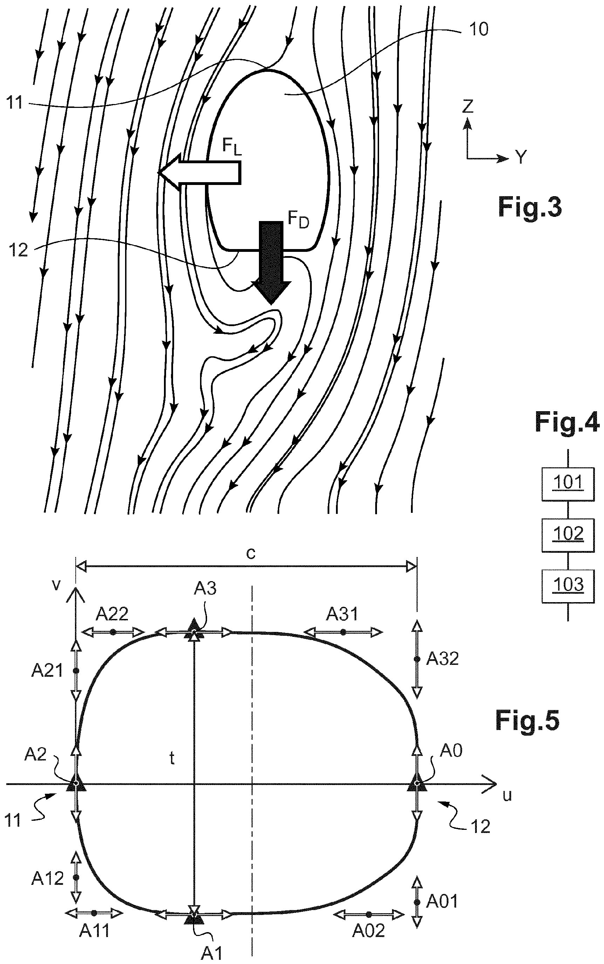

La figure 3 représente une vue de l'écoulement du flux d'air autour de la poutre de queue 10. Selon cette figure 3, une section de la poutre de queue 10 est vue depuis l'arrière de l'aéronef 1 dans un plan perpendiculaire à la direction longitudinale X de l'aéronef 1. Ce flux d'air est généré par un rotor principal 3 en rotation selon le sens anti-trigonométrique conformément à la figure 1, lors d'un vol stationnaire ou à faible vitesse d'avancement de l'aéronef 1. Ce flux d'air balaye la poutre de queue 10 d'un bord d'attaque 11 situé en regard du rotor principal 3 vers un bord de fuite 12.

On constate que ce flux d'air ne balaye par la poutre de queue 10 selon une direction purement verticale, mais est incliné de la droite vers la gauche suite à l'effet de rotation dans le sens anti-trigonométrique du rotor principal 3. En conséquence, les flux d'air balayant le côté droit et le côté gauche de la poutre de queue 10 ne sont pas identiques.

La différence de ces flux d'air associée à la forme de la section de la poutre de queue 10 contribuent à l'apparition de la force aérodynamique latérale F_{L} qui est une force horizontale selon la direction transversale Y. De plus, une force aérodynamique verticale et dirigée vers le bas, appelée déportance F_{D}, apparait également au niveau du bord de fuite de la poutre de queue 10.

Avantageusement, selon la représentation des figures 1 et 2, la force latérale F_{L} crée un couple s'ajoutant au couple principal généré par le rotor auxiliaire 4 et participe à l'équilibre du couple rotor C_{R}. En conséquence, le besoin en puissance mécanique du rotor auxiliaire 2 est réduit, ce qui permet à l'installation motrice de l'aéronef 1 de disposer d'une puissance mécanique supplémentaire pour entrainer en rotation le rotor principal 3.

Toutefois, selon la géométrie des sections de la poutre de queue 10 et l'orientation du flux d'air, la force latérale F_{L} peut créer un couple s'opposant au couple principal généré par le rotor auxiliaire 4. Par suite, le besoin en puissance mécanique du rotor auxiliaire 2 est augmenté, ce qui pénalise les performances de l'aéronef 1.

A contrario, la déportance F_{D}, qui est toujours dirigée vers le bas, s'oppose toujours à la portance générée par le rotor principal 3. Cette déportance F_{D} est donc toujours pénalisante pour les performances de l'aéronef 1.

La figure 5 représente un exemple d'une section d'une poutre de queue 10 correspond à un type de sections standards symétriques et optimisée afin de minimiser la déportance F_{D}. Cette section est été définie par un procédé d'optimisation des sections d'une poutre de queue dont un schéma synoptique est représenté sur la figure 4.

Sur cette figure 5, un repère secondaire (U,V) est attaché au bord d'attaque 11 de la section de la poutre de queue 10 et situé dans un plan perpendiculaire à la direction longitudinale X. L'axe des abscisses U est défini par la direction de la corde c de la section de la poutre de queue 10 et s'étend du bord d'attaque 11 vers le bord de fuite 12 parallèlement à la direction d'élévation Z. L'axe des ordonnées V est défini par la direction de l'épaisseur maximale t de la section de la poutre de queue 10 et est parallèle à la direction transversale Y. Une unité de l'axe des abscisses U et de l'axe des ordonnées V est égale à la corde c.

Ce procédé d'optimisation des sections d'une poutre de queue comporte une étape de création 101 d'une base de données caractérisant les sections « standards » d'une poutre de queue. Cette base de données a été établie suite à des études et des simulations numériques, puis confirmée par des essais.

Cette base de données comporte quatre types de sections standards de la poutre de queue 10, un premier type de sections standards symétriques et un deuxième type de sections standards asymétriques maximisant la force latéral F_{L} ainsi qu'un troisième type de sections standards symétriques et un quatrième type de sections standards asymétriques minimisant la déportance F_{D}.

Chaque section standard est définie par des points caractéristiques extrêmes *A0*,*A1*,*A2*,*A3* et des points caractéristiques intermédiaires *A01*,*A02*,*A11*,*A12*,*A21*,*A22*,*A31*,*A32* définis dans le repère secondaire (U,V). Les points caractéristiques extrêmes *A0*,*A1*,*A2*,*A3* sont situés sur le contour de la section standard alors que les points caractéristiques intermédiaires *A01*,*A02*,*A11*,*A12*,*A21*,*A22*,*A31*,*A32* sont des points de construction de ce contour. Le contour de chaque section de la poutre de queue 10 est défini par quatre courbes de Bézier d'ordre 4 reliant respectivement deux points caractéristiques extrêmes *A0*,*A1*,*A2*,*A3* comme représenté sur la figure 5.

Ainsi, les points caractéristiques intermédiaires *A01*,*A02*,*A11*, *A12*,*A21*,*A22*,*A31*,*A32* sont des points de construction de chaque courbe de Bézier, qui définissent d'une part la forme de ce contour et d'autre part la tangence de ce contour au niveau de chaque point caractéristique extrême *A0*,*A1*,*A2*,*A3*. Par exemple, la forme de la section est plus ou moins étirée au niveau de chaque point caractéristique extrême *A0*,*A1*,*A2*,*A3* selon que chaque point caractéristique intermédiaire est plus ou moins éloigné de ce point caractéristique extrême *A0*,*A1*,*A2*,*A3* auquel il est rattaché. Le contour de chaque section de la poutre de queue 10 peut également être formé en reliant les points caractéristiques extrêmes par d'autres types de courbes polynomiales.

La base de données comporte les tableaux suivants définissant des intervalles d'une part pour l'abscisse des points caractéristiques extrêmes *A1*,*A3* et d'autre part pour des valeurs caractéristiques de l'abscisse des points caractéristiques intermédiaires *A02*,*A11*,*A22*,*A31* de l'ordonnée des points caractéristiques intermédiaires *A01*,*A11*,*A12*,*A32* pour chaque type de sections standards.

L'abscisse des points caractéristiques extrêmes *A1*,*A3* est définie directement dans le repère secondaire (U,V). Les valeurs caractéristiques des points caractéristiques intermédiaires sont définies relativement à la distance entre les deux points caractéristiques extrêmes encadrant respectivement chaque point caractéristique intermédiaire.

Ces intervalles et, par suite, ces sections standards, sont fonction du rapport *t*/*c* de l'épaisseur maximale *t* d'une section d'une poutre de queue 10 par la corde c de cette section. Ce rapport *t*/*c* caractérise l'épaisseur relative de cette section de la poutre de queue et est généralement évolutif le long d'une poutre de queue 10 selon la direction longitudinale X de l'aéronef 1.

Le premier tableau suivant concerne le premier type de sections standards symétriques maximisant la force latérale F_{L} de la poutre de queue :

| t/c | valeur | uA1,uA3 | vA01 | uA02 | uA11 | vA12 | vA21 | uA22 | uA31 | vA32 |
|---|---|---|---|---|---|---|---|---|---|---|
| 50% | basse | 0,55 | 0,6 | 0,1 | 0,6 | 0,08 | -0,08 | 0,6 | 0,1 | -0,6 |
| | haute | 0,95 | 0,95 | 0,25 | 0,95 | 0,25 | -0,25 | 0,95 | 0,25 | -0,95 |
| 60% | basse | 0,55 | 0,6 | 0,1 | 0,6 | 0,08 | -0,08 | 0,6 | 0,1 | -0,6 |
| | haute | 0,95 | 0,95 | 0,25 | 0,95 | 0,25 | -0,25 | 0,95 | 0,25 | -0,95 |
| 70% | basse | 0,55 | 0,6 | 0,08 | 0,6 | 0,08 | -0,08 | 0,6 | 0,08 | -0,6 |
| | haute | 0,95 | 0,95 | 0,4 | 0,95 | 0,25 | -0,25 | 0,95 | 0,4 | -0,95 |
| 80% | basse | 0,55 | 0,6 | 0,1 | 0,6 | 0,08 | -0,08 | 0,6 | 0,1 | -0,6 |
| | haute | 0,95 | 0,95 | 0,25 | 0,95 | 0,25 | -0,25 | 0,95 | 0,25 | -0,95 |
| 90% à 130% | basse | 0,55 | 0,6 | 0,1 | 0,6 | 0,08 | -0,08 | 0,6 | 0,1 | -0,6 |
| | haute | 0,99 | 0,95 | 0,25 | 0,95 | 0,25 | -0,25 | 0,95 | 0,25 | -0,95 |

Le deuxième tableau suivant concerne le deuxième type de sections standards asymétriques maximisant la force latérale F_{L} de la poutre de queue :

| t/c | valeur | uA1,uA3 | vA01 | uA02 | uA11 | vA12 | vA21 | uA22 | uA31 | vA32 |
|---|---|---|---|---|---|---|---|---|---|---|
| 50% | basse | 0,45 | 0,08 | 0,6 | 0,08 | 0,6 | -0,6 | 0,08 | 0,25 | -0,1 |
| | haute | 0,75 | 0,25 | 0,95 | 0,25 | 0,95 | -0,95 | 0,25 | 0,45 | -0,3 |
| 60% | basse | 0,45 | 0,08 | 0,6 | 0,08 | 0,6 | -0,6 | 0,08 | 0,6 | -0,1 |
| | haute | 0,75 | 0,25 | 0,95 | 0,25 | 0,95 | -0,95 | 0,25 | 0,95 | -0,3 |
| 70% | basse | 0,45 | 0,08 | 0,6 | 0,08 | 0,6 | -0,6 | 0,08 | 0,6 | -0,1 |
| | haute | 0,75 | 0,25 | 0,95 | 0,25 | 0,95 | -0,95 | 0,25 | 0,95 | -0,3 |
| 80% | basse | 0,45 | 0,08 | 0,6 | 0,08 | 0,6 | -0,6 | 0,08 | 0,6 | -0,1 |
| | haute | 0,75 | 0,25 | 0,95 | 0,25 | 0,95 | -0,95 | 0,25 | 0,95 | -0,3 |
| 90% à 130% | basse | 0,5 | 0,1 | 0,6 | 0,08 | 0,6 | -0,6 | 0,08 | 0,6 | -0,1 |
| | haute | 0,99 | 0,6 | 0,95 | 0,25 | 0,95 | -0,95 | 0,25 | 0,95 | -0,3 |

Le troisième tableau suivant concerne le troisième type de sections standards symétriques minimisant la déportance F_{D} de la poutre de queue et dont un exemple de section est représenté sur la figure 5 :

| t/c | valeur | uA1,uA3 | vA01 | uA02 | uA11 | vA12 | vA21 | uA22 | uA31 | vA32 |
|---|---|---|---|---|---|---|---|---|---|---|
| 50% | basse | 0,2 | 0,5 | 0,1 | 0,2 | 0,1 | -0,1 | 0,2 | 0,1 | -0,5 |
| | haute | 0,5 | 0,9 | 0,4 | 0,4 | 0,4 | -0,4 | 0,4 | 0,4 | -0,9 |
| 60% | basse | 0,2 | 0,5 | 0,1 | 0,3 | 0,1 | -0,1 | 0,3 | 0,1 | -0,5 |
| | haute | 0,5 | 0,9 | 0,4 | 0,7 | 0,4 | -0,4 | 0,7 | 0,4 | -0,9 |
| 70% | basse | 0,2 | 0,5 | 0,1 | 0,3 | 0,1 | -0,1 | 0,3 | 0,1 | -0,5 |
| | haute | 0,5 | 0,9 | 0,4 | 0,7 | 0,4 | -0,4 | 0,7 | 0,4 | -0,9 |
| 80% | basse | 0,2 | 0,5 | 0,1 | 0,4 | 0,1 | -0,1 | 0,4 | 0,1 | -0,5 |
| | haute | 0,5 | 0,9 | 0,4 | 0,7 | 0,4 | -0,4 | 0,7 | 0,4 | -0,9 |
| 90% à 130% | basse | 0,2 | 0,5 | 0,1 | 0,7 | 0,1 | -0,1 | 0,7 | 0,1 | -0,5 |
| | haute | 0,5 | 0,9 | 0,4 | 0,95 | 0,4 | -0,4 | 0,95 | 0,4 | -0,9 |

Enfin, le quatrième tableau suivant concerne le quatrième type de sections standards asymétriques minimisant la déportance F_{D} de la poutre de queue :

| valeur | uA1,uA3 | vA01 | uA02 | uA11 | vA12 | vA21 | uA22 | uA31 | vA32 |
|---|---|---|---|---|---|---|---|---|---|
| basse | 0,2 | 0,1 | 0,55 | 0,1 | 0,65 | -0,65 | 0,1 | 0,65 | -0,1 |
| haute | 0,5 | 0,3 | 0,85 | 0,4 | 0,9 | -0,9 | 0,25 | 0,9 | -0,3 |

Ces valeurs sont pour ce quatrième type de sections standards indépendantes du rapport *t*/*c.*

De plus, les sections standards symétriques des premier et troisième types sont indépendantes du sens de rotation du rotor principal 3. Par contre, les sections standards asymétriques des second et quatrième types sont différentes selon le sens de rotation du rotor principal 3. Ainsi, une section standard asymétrique définie pour un rotor principal 3 tournant dans le sens trigonométrique selon une vue de dessus doit être symétrisée par rapport à l'axe des abscisses U afin de définir une section standard asymétrique équivalente pour un rotor principal 3 tournant dans le sens anti-trigonométrique.

Ces tableaux de la base de données fournissent des valeurs pour un rotor principal 3 tournant dans le sens anti-trigonométrique selon la figure 1.

Les abscisses et les ordonnées non fournies par ces tableaux sont définies par le concepteur et peuvent également être imposées par des contraintes de fabrication ou de tangence.

Notamment, comme représenté sur la figure 5, un premier point caractéristique extrême *A0* est situé au niveau du bord de fuite 12 et de coordonnées (1,0). Un deuxième point caractéristique extrême *A2* est situé au niveau du bord d'attaque 11 et de coordonnées (0,0). De plus, les points caractéristiques extrêmes *A1* et *A3* forment l'épaisseur maximale *t* de la section standard et ont pour ordonnées respectivement *-t*/*(2.c)* et *t*/*(2.c).* Ces points caractéristiques extrêmes *A1* et *A3* ont une même abscisse.

En outre, pour la section de poutre de queue 10 représentée sur la figure 5, les abscisses et les ordonnées non fournies par ces tableaux sont imposées par des contraintes de tangence au niveau de chaque point caractéristique extrême *A0*,*A1*,*A2*,*A3* de sorte que la section standard est continu en tangence. Les ordonnées des points caractéristiques intermédiaires *A02*, *A11* sont égales à l'ordonnée du point caractéristique extrême *A1* auquel ils sont rattachés alors que les ordonnées des points caractéristiques intermédiaires *A22*, *A31* sont égales à l'ordonnée du point caractéristique extrême *A3* auquel ils sont rattachés. De même, les abscisses des points caractéristiques intermédiaires *A01*, *A32* sont égales à l'abscisse du point caractéristique extrême *A0* et les abscisses des points caractéristiques intermédiaires *A12*, *A21* sont égales à l'abscisse du point caractéristique extrême *A2.*

On constate par ailleurs sur la figure 5 que, pour le troisième type de sections standards symétriques, l'épaisseur maximale *t* est agencée en amont du milieu de la corde *c* selon le sens d'écoulement du flux d'air. De même, pour le quatrième type de sections standards asymétriques, l'épaisseur maximale *t* est également agencée en amont du milieu de la corde c selon le sens d'écoulement du flux d'air.

Par contre, pour le premier type de sections standards symétriques et le deuxième type de sections standards asymétriques, l'épaisseur maximale t de la section de la poutre de queue 10 est agencée en aval du milieu de la corde *c* selon le sens d'écoulement du flux d'air du rotor principal 3. De plus, pour le deuxième type de sections standards asymétriques, l'épaisseur maximale *t* de la section est agencée à proximité du milieu de la corde *c.*

Ensuite, le procédé d'optimisation des sections d'une poutre de queue comporte une étape 102 d'établissement des caractéristiques aérodynamiques et structurelles recherchées de la poutre de queue 10 définissant notamment les besoins de l'aéronef 1 en termes de force latérale F_{L} et de déportance F_{D} engendrées par le flux d'air du rotor principal 3 circulant sur la poutre de queue 10 ainsi que des dimensions générales de la poutre de queue 10 et son épaisseur relative pour certaines sections.

Ces caractéristiques aérodynamiques recherchées de la poutre de queue 10 sont principalement définies selon les types de missions que doit effectuer l'aéronef 1. Ainsi, si l'aéronef 1 est destiné à effectuer beaucoup de vols verticaux de montée, les caractéristiques aérodynamiques recherchées de la poutre de queue 10 sont notamment de minimiser la déportance F_{D}. Dans la majorité des autres cas, ces caractéristiques aérodynamiques recherchées sont de maximiser la force latérale F_{L}.

De plus, les caractéristiques structurelles recherchées de la poutre de queue 10 définissent des enveloppes dimensionnelles et structurelles de tenue mécanique pour la poutre de queue 10 caractérisant respectivement d'une part l'implantation de la poutre de queue 10 avec l'architecture de l'aéronef 1 et d'autre part une rigidité et une tenue mécanique de la poutre de queue 10.

Enfin, le procédé d'optimisation des sections d'une poutre de queue comporte une étape 103 de définition des sections de la poutre de queue 10. Cette définition des sections est effectuée en fonction des sections standards de la base de données, des caractéristiques aérodynamiques et structurelles recherchées de la poutre de queue 10 et généralement du rapport *t*/*c* de chaque section.

En outre, le choix entre une poutre de queue 10 à sections symétriques ou bien asymétriques peut être fait sur des critères structurels. Une telle poutre de queue à sections symétriques est de construction simple et permet de limiter sa masse tout en permettant d'avoir un comportement symétrique vis-à-vis du flux d'air du rotor principal 3.

A contrario, une poutre de queue 10 à sections asymétriques présente généralement une complexité structurelle et un comportement global de l'aéronef 1 non-linéaire induit par cette dissymétrie. Toutefois, le gain aérodynamique obtenu peut permettre, grâce aux sections standards de la base de données du procédé de l'invention et notamment une augmentation de la force latérale F_{L}, de compenser cette complexité structurelle et la masse qui l'accompagne.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé d'optimisation des sections d'une poutre de queue (10) destinée à un aéronef à voilure tournante (1) muni d'au moins un rotor principal (3) afin de privilégier une minimisation de la déportance F_{D} et/ou une maximisation de la force latérale F_{L} de ladite poutre de queue (10), ladite poutre de queue (10) s'étendant selon une direction longitudinale (X), chaque section étant définie dans un plan perpendiculaire à ladite direction longitudinale (X) par une corde c entre un bord d'attaque et un bord de fuite de ladite section et par une épaisseur maximale *t* mesurée perpendiculairement à ladite corde *c*,
ledit procédé comportant les étapes suivantes :
- une étape de réalisation (100) d'études et de simulations numériques réalisées par un outil de simulation numérique sur des profils de sections d'une poutre de queue (10) afin d'évaluer des forces aérodynamiques latérales et de déportance desdits profils de sections,
- une étape de création (101) d'une base de données caractérisant des sections standards d'une poutre de queue (10) à partir desdits profils de sections et de leurs forces latérales et de déportance obtenues lors de ladite étape de réalisation (100) et en déterminant lesdites sections standards optimisant lesdites forces aérodynamiques latérales et de déportance en se basant sur un couplage entre lesdites études et simulations numériques réalisées par ledit outil de simulation numérique et un logiciel d'optimisation déterminant de nouvelles géométries de profils à partir des informations desdites forces aérodynamiques latérales et de déportance obtenues par ledit outil de simulation numérique, ladite base de données comportant quatre types de sections standards de ladite poutre de queue (10), un premier type de sections standards symétriques maximisant la force latérale F_{L} de ladite poutre de queue (10), un deuxième type de sections standards asymétriques maximisant ladite force latérale F_{L}, un troisième type de sections standards symétriques minimisant la déportance F_{D} de ladite poutre de queue (10) et un quatrième type de sections standards asymétriques minimisant ladite déportance F_{D},
chaque section standard étant définie par des points caractéristiques extrêmes *A0,A1,A2,A3* et des points caractéristiques intermédiaires *A01,A02,A11,A12,A21,A22,A31,A32,* lesdits points caractéristiques étant définis dans un repère secondaire (U,V) attaché à chaque section standard et défini par les directions de ladite corde *c* et de ladite épaisseur maximale *t*, une unité de l'axe des abscisses (U) et des ordonnées (V) étant égale à ladite corde *c*, lesdits points caractéristiques extrêmes *A0,A1,A2,A3* appartenant à un contour de ladite section standard, *A0* étant situé au niveau dudit bord de fuite et de coordonnées [1,0], *A2* étant situé au niveau du bord d'attaque et de coordonnées [0,0], lesdits points caractéristiques extrêmes *A1* et *A3* formant ladite épaisseur maximale *t* et ayant pour ordonnées respectivement *-t*//*2.c]* et *t*/*[2.c],* lesdits points caractéristiques intermédiaires *A01,A02,A11,A12,A21,A22,A31,A32* étant des points de construction dudit contour de ladite section standard permettant de définir une direction du contour de ladite section au niveau de chaque point caractéristique extrême *A0,A1,A2,A3,* dont les abscisses dans le repère secondaire (U,V) sont identifiées par la lettre u et les ordonnées par la lettre v,
lesdites sections standards étant définies en fonction du rapport t/c de ladite épaisseur maximale t de chaque section standard par ladite corde c de ladite section standard,
ladite base de données comportant le premier tableau suivant définissant lesdits points caractéristiques pour ledit premier type de sections standards symétriques,
| t/c | uA1,uA3 | vA01 | uA02 | uA11 | vA12 | vA21 | uA22 | uA31 | vA32 |
|---|---|---|---|---|---|---|---|---|---|
| 50% | 0,75 | 0,8 | 0,15 | 0,8 | 0,15 | -0,15 | 0,8 | 0,15 | -0,8 |
| 60% | 0,77 | 0,8 | 0,15 | 0,8 | 0,15 | -0,15 | 0,8 | 0,15 | -0,8 |
| 70% | 0,85 | 0,8 | 0,15 | 0,8 | 0,15 | -0,15 | 0,8 | 0,15 | -0,8 |
| 80% | 0,85 | 0,8 | 0,15 | 0,8 | 0,15 | -0,15 | 0,8 | 0,15 | -0,8 |
| 90% à 130% | 0,85 | 0,8 | 0,15 | 0,8 | 0,15 | -0,15 | 0,8 | 0,15 | -0,8 |
ladite base de données comportant le deuxième tableau suivant définissant lesdits points caractéristiques pour ledit deuxième type de sections standards asymétriques, pour un rotor principal (3) tournant dans le sens trigonométrique selon une vue de dessus,
| t/c | uA1, uA3 | vA01 | uA02 | uA11 | vA12 | vA21 | uA22 | uA31 | vA32 |
|---|---|---|---|---|---|---|---|---|---|
| 50% | 0,65 | 0,15 | 0,85 | 0,15 | 0,8 | -0,8 | 0,15 | 0,35 | -0,2 |
| 60% | 0,6 | 0,15 | 0,85 | 0,15 | 0,8 | -0,8 | 0,15 | 0,8 | -0,2 |
| 70% | 0,6 | 0,15 | 0,85 | 0,15 | 0,8 | -0,8 | 0,15 | 0,8 | -0,2 |
| 80% | 0,6 | 0,15 | 0,85 | 0,15 | 0,8 | -0,8 | 0,15 | 0,8 | -0,2 |
| 90% à 130% | 0,9 | 0,4 | 0,85 | 0,15 | 0,8 | -0,8 | 0,15 | 0,8 | -0,2 |
ladite base de données comportant le troisième tableau suivant définissant lesdits points caractéristiques pour ledit troisième type de sections standards symétriques,
| t/c | uA1, uA3 | vA01 | uA02 | uA11 | vA12 | vA21 | uA22 | uA31 | vA32 |
|---|---|---|---|---|---|---|---|---|---|
| 50% | 0,3 | 0,7 | 0,2 | 0,3 | 0,25 | -0,25 | 0,3 | 0,2 | -0,7 |
| 60% | 0,3 | 0,7 | 0,2 | 0,5 | 0,25 | -0,25 | 0,5 | 0,2 | -0,7 |
| 70% | 0,3 | 0,7 | 0,2 | 0,5 | 0,25 | -0,25 | 0,5 | 0,2 | -0,7 |
| 80% | 0,3 | 0,7 | 0,2 | 0,55 | 0,25 | -0,25 | 0,55 | 0,2 | -0,7 |
| 90% à 130% | 0,3 | 0,7 | 0,2 | 0,8 | 0,25 | -0,25 | 0,8 | 0,2 | -0,7 |
et ladite base de données comportant le quatrième tableau suivant définissant lesdits points caractéristiques pour ledit quatrième type de sections standards asymétriques, pour un rotor principal (3) tournant dans le sens trigonométrique selon une vue de dessus,
| uA1, uA3 | vA01 | uA02 | uA11 | vA12 | vA21 | uA22 | uA31 | vA32 |
|---|---|---|---|---|---|---|---|---|
| 0,35 | 0,15 | 0,7 | 0,2 | 0,8 | -0,8 | 0,2 | 0,8 | -0,15 |
les ordonnées desdits points caractéristiques intermédiaires *A02*, *A11* étant égales à l'ordonnée dudit point caractéristique extrême *A1*, les ordonnées desdits points caractéristiques intermédiaires *A22*, *A31* étant égales à l'ordonnée dudit point caractéristique extrême *A3*, les abscisses desdits points caractéristiques intermédiaires *A01*, *A32* étant égales à l'abscisse dudit point caractéristique extrême *A0* et les abscisses desdits points caractéristiques intermédiaires *A12*, *A21* étant égales à l'abscisse dudit point caractéristique extrême *A2.*
- une étape d'établissement (102) des caractéristiques aérodynamiques et structurelles recherchées de ladite poutre de queue (10) en termes de force latérale F_{L} et de déportance F_{D} engendrées par le flux d'air du rotor principal (3) circulant sur ladite poutre de queue (10), et
- une étape de définition (103) desdites sections de ladite poutre de queue (10) en fonction desdites sections standards et desdites caractéristiques aérodynamiques et structurelles recherchées de ladite poutre de queue (10) afin de minimiser ladite déportance F_{D} et/ou de maximiser ladite force latérale F_{L} de ladite poutre de queue (10), chaque section de ladite poutre de queue (10) étant formée par des courbes de Bézier d'ordre 4 reliant deux à deux lesdits points caractéristiques extrêmes *A0*,*A1*,*A2*,*A3*,*A0* et construite grâce auxdits points caractéristiques intermédiaires *A01*,*A02*,*A11*,*A12*, *A21*,*A22*,*A31*,*A32.*

2. Procédé selon la revendication 1, tel que pour ledit premier type de sections standards symétriques maximisant ladite force latérale F_{L}, ladite épaisseur maximale *t* d'une section standard est agencée en aval du milieu de ladite corde *c* de ladite section standard selon le sens d'écoulement dudit flux d'air dudit rotor principal (3), pour ledit deuxième type de sections standards asymétriques maximisant ladite force latérale F_{L}, ladite épaisseur maximale *t* est agencée en aval du milieu de ladite corde *c* et à proximité dudit milieu de ladite corde *c*, pour ledit troisième type de sections standards symétriques et ledit quatrième type de sections standards asymétriques minimisant ladite déportance F_{D}, ladite épaisseur maximale *t* est agencée en amont dudit milieu de ladite corde *c.*

## Patentansprüche

1. Verfahren zur Optimierung der Querschnitte eines Heckauslegers (10) für ein Drehflügelflugzeug (1) mit mindestens einem Hauptrotor (3), um eine Minimierung des Versatzes F_{D} und/oder eine Maximierung der Seitenkraft F_{L} des Heckauslegers (10) zu begünstigen, wobei sich der Heckausleger (10) in einer Längsrichtung (X) erstreckt und jeder Querschnitt in einer zu der Längsrichtung (X) senkrechten Ebene durch eine Sehne *c* zwischen einer Vorderkante und einer Hinterkante des Querschnitts und durch eine senkrecht zu der Sehne *c* gemessene maximale Dicke *t* definiert ist,
wobei das Verfahren die folgenden Schritte umfasst:
- einen Schritt des Durchführens (100) von Untersuchungen und numerischen Simulationen mit einem numerischen Simulationswerkzeug an Querschnittsprofilen eines Heckauslegers (10), um aerodynamische Seitenkräfte und Versatzkräfte der Querschnittsprofile zu bewerten,
- einen Schritt des Erzeugens (101) einer Datenbank, die Standardquerschnitte eines Heckauslegers (10) charakterisiert, ausgehend von den während des Schritts des Durchführens erhaltenen Querschnittsprofilen und ihren Seiten- und Versatzkräften, und durch Bestimmen der Standardquerschnitte, die die aerodynamischen Seiten- und Versatzkräfte optimieren, auf der Grundlage einer Kopplung zwischen den durch das numerische Simulationswerkzeug durchgeführten Untersuchungen und numerischen Simulationen und einer Optimierungssoftware, die neue Profilgeometrien aus den durch das numerische Simulationswerkzeug erhaltenen Informationen über die aerodynamischen Seitenkräfte und Versatzkräfte bestimmt, wobei die Datenbank vier Typen von Standardquerschnitten des Heckauslegers (10) umfasst, einen ersten Typ von symmetrischen Standardquerschnitten, die die Seitenkraft F_{L} des Heckauslegers (10) maximieren, einen zweiten Typ von asymmetrischen Standardquerschnitten, die die Seitenkraft F_{L} maximieren, einen dritten Typ von symmetrischen Standardquerschnitten, die den Versatz F_{D} des Heckauslegers (10) minimieren, und einen vierten Typ von asymmetrischen Standardquerschnitten, die den Versatz F_{D} minimieren,
wobei jeder Standardabschnitt durch charakteristische Extrempunkte *A0, A1, A2, A3* und charakteristische Zwischenpunkte *A01, A02, A11, A12, A21, A22, A31, A32* definiert ist, wobei die charakteristischen Punkte in einem sekundären Bezugssystem (U, V) definiert sind, das an jedem Standardquerschnitt fest und durch die Richtungen der Sehne c und die maximale Dicke t definiert ist, wobei eine Einheit der Abszissenachse (U) und der Ordinatenachse (V) gleich der Sehne c ist, die charakteristischen Extrempunkte *A0, A1, A2, A3* zu einer Kontur des Standardquerschnitts gehören, *A0* an der Hinterkante liegt und Koordinaten [1,0] hat, A2 an der Vorderkante liegt und Koordinaten [0,0] hat, und die charakteristischen Extrempunkte *A1* und A3 die maximale Dicke t bilden und Ordinaten -*t*/*[2.c]* bzw. *t*/*[2.c]* haben, wobei die charakteristischen Zwischenpunkte *A01, A02, A11, A12, A21, A22, A31, A32* Konstruktionspunkte der Kontur des Standardquerschnitts sind, die es ermöglichen, eine Richtung der Kontur des Querschnitts an jedem charakteristischen Extrempunkt *A0, A1, A2, A3* zu definieren, deren Abszissen durch den Buchstaben u und Ordinaten durch den Buchstaben v in dem sekundären Bezugssystem (U, V) identifiziert sind,
wobei die Standardquerschnitte in Abhängigkeit vom Verhältnis *t*/*c* der maximalen Dicke t jedes Standardquerschnitts zur Sehne c des Standardquerschnitts definiert sind,
wobei die Datenbank die folgende erste Tabelle umfasst, die die charakteristischen Punkte für den ersten Typ von symmetrischen Standardabschnitten definiert,
| t/c | uA1,uA3 | vA01 | uA02 | uA11 | vA12 | vA21 | uA22 | uA31 | vA32 |
|---|---|---|---|---|---|---|---|---|---|
| 50% | 0,75 | 0,8 | 0,15 | 0,8 | 0,15 | -0,15 | 0,8 | 0,15 | -0,8 |
| 60% | 0,77 | 0,8 | 0,15 | 0,8 | 0,15 | -0,15 | 0,8 | 0,15 | -0,8 |
| 70% | 0,85 | 0,8 | 0,15 | 0,8 | 0,15 | -0,15 | 0,8 | 0,15 | -0,8 |
| 80% | 0,85 | 0,8 | 0,15 | 0,8 | 0,15 | -0,15 | 0,8 | 0,15 | -0,8 |
| 90% ä 130% | 0,85 | 0,8 | 0,15 | 0,8 | 0,15 | -0,15 | 0,8 | 0,15 | -0,8 |
wobei die Datenbank die folgende zweite Tabelle umfasst, die die charakteristischen Punkte für den zweiten Typ von asymmetrischen Standardabschnitten für einen Hauptrotor (3) definiert, der sich in einer Draufsicht in trigonometrischer Richtung dreht,
| t/c | uA1,uA3 | vA01 | uA02 | uA11 | vA12 | vA21 | uA22 | uA31 | vA32 |
|---|---|---|---|---|---|---|---|---|---|
| 50% | 0,65 | 0,15 | 0,85 | 0,15 | 0,8 | -0,8 | 0,15 | 0,35 | -0,2 |
| 60% | 0,6 | 0,15 | 0,85 | 0,15 | 0,8 | -0,8 | 0,15 | 0,8 | -0,2 |
| 70% | 0,6 | 0,15 | 0,85 | 0,15 | 0,8 | -0,8 | 0,15 | 0,8 | -0,2 |
| 80% | 0,6 | 0,15 | 0,85 | 0,15 | 0,8 | -0,8 | 0,15 | 0,8 | -0,2 |
| 90% à 130% | 0,9 | 0,4 | 0,85 | 0,15 | 0,8 | -0.8 | 0,15 | 0,8 | -0,2 |
wobei die Datenbank die folgende dritte Tabelle umfasst, die die charakteristischen Punkte für den dritten Typ von symmetrischen Standardabschnitten definiert,
| t/c | uA1, uA3 | vA01 | uA02 | uA11 | vA12 | vA21 | uA22 | uA31 | vA32 |
|---|---|---|---|---|---|---|---|---|---|
| 50% | 0,3 | 0,7 | 0,2 | 0,3 | 0,25 | -0,25 | 0,3 | 0,2 | -0,7 |
| 60% | 0,3 | 0,7 | 0,2 | 0,5 | 0,25 | -0,25 | 0,5 | 0,2 | -0,7 |
| 70% | 0,3 | 0,7 | 0,2 | 0,5 | 0,25 | -0,25 | 0,5 | 0,2 | -0,7 |
| 80% | 0,3 | 0,7 | 0,2 | 0,55 | 0,25 | -0,25 | 0,55 | 0,2 | -0,7 |
| 90% à 130% | 0,3 | 0,7 | 0,2 | 0,8 | 0,25 | -0,25 | 0,8 | 0,2 | -0,7 |
und wobei die Datenbank die folgende vierte Tabelle umfasst, die die charakteristischen Punkte für den vierten Typ von asymmetrischen Standardabschnitten für einen Hauptrotor (3) definiert, der sich in einer Draufsicht in trigonometrischer Richtung dreht,
| uA1, uA3 | vA01 | uA02 | uA11 | vA12 | vA21 | uA22 | uA31 | vA32 |
|---|---|---|---|---|---|---|---|---|
| 0,35 | 0,15 | 0,7 | 0,2 | 0,8 | -0,8 | 0,2 | 0,8 | -0,15 |
wobei die Ordinaten der charakteristischen Zwischenpunkte *A02, A11* gleich der Ordinate des charakteristischen Extrempunktes *A1,* die Ordinaten der charakteristischen Zwischenpunkte *A22, A31* gleich der Ordinate des charakteristischen Extrempunktes *A3*, die Abszissen der charakteristischen Zwischenpunkte *A01, A32* gleich der Abszisse des charakteristischen Extrempunktes *A0* und die Abszissen der charakteristischen Zwischenpunkte *A12, A21* gleich der Abszisse des charakteristischen Extrempunktes *A2* sind;
- einen Schritt des Festlegens (102) der gewünschten aerodynamischen und strukturellen Eigenschaften des Heckauslegers (10) in Bezug auf die Seitenkraft F_{L} und den Versatz F_{D}, die durch den Luftstrom des Hauptrotors (3) erzeugt werden, der über den Heckausleger (10) strömt, und
- einen Schritt des Definierens (103) der Querschnitte des Heckauslegers (10) als eine Funktion der Standardquerschnitte und der gewünschten aerodynamischen und strukturellen Eigenschaften des Heckauslegers (10), um den Versatz F_{D} zu minimieren und/oder die Seitenkraft F_{L} des Heckauslegers (10) zu maximieren, wobei jeder Querschnitt des Heckauslegers (10) durch Bezier-Kurven vierter Ordnung gebildet wird, die die charakteristischen Extrempunkte *A0, A1, A2, A3, A0* paarweise verbinden, und mit Hilfe der charakteristischen Zwischenpunkte A01, A02, A11, A12, A21, A22, A31, A32 konstruiert wird.

2. Verfahren nach Anspruch 1,
derart, dass bei dem ersten Typ von symmetrischen Standardquerschnitten, die die Seitenkraft F_{L} maximieren, die maximale Dicke *t* eines Standardquerschnitts stromabwärts von der Mitte der Sehne *c* des Standardquerschnitts bezogen auf die Strömungsrichtung des Luftstroms des Hauptrotors (3) angeordnet ist, bei dem zweiten Typ von asymmetrischen Standardquerschnitten, die die Seitenkraft F_{L} maximieren, die maximale Dicke *t* stromabwärts von der Mitte der Sehne *c* und nahe der Mitte der Sehne c angeordnet ist, bei dem dritten Typ von symmetrischen Standardabschnitten und dem vierten Typ von asymmetrischen Standardabschnitten, die den Versatz F_{D} minimieren, die maximale Dicke *t* stromaufwärts von der Mitte der Sehne *c* angeordnet ist.

## Claims

1. Method for optimising sections of a tail boom (10) for a rotary wing aircraft (1) provided with at least one main rotor (3) in order to promote a minimisation of the negative lift F_{D} and/or a maximisation of the lateral force F_{L} of said tail boom (10), said tail boom (10) extending in a longitudinal direction (X), each section being defined in a plane perpendicular to said longitudinal direction (X) by a chord *c* between a leading edge and a trailing edge of said section and by a maximum thickness *t* measured perpendicularly to said chord c, said method comprising the following steps:
- a step (100) of executing studies and digital simulations carried out by a digital simulation tool on section profiles of a tail boom (10) in order to evaluate aerodynamic lateral and negative lift forces of said section profiles,
- a step (101) of creating a database characterising standard sections of a tail boom (10) from said section profiles and from their lateral and negative lift forces obtained during said execution step (100) and, by determining said standard sections optimising said aerodynamic lateral and negative lift forces on the basis of a linkage between said studies and digital simulations executed by said digital simulation tool and a piece of optimisation software determining new profile geometries from the information regarding said aerodynamic lateral and negative lift forces obtained by said digital simulation tool, said database comprising four types of standard sections of said tail boom (10), a first type of symmetrical standard sections maximising the lateral force F_{L} of said tail boom (10), a second type of asymmetrical standard sections maximising said lateral force F_{L}, a third type of symmetrical standard sections minimising the negative lift F_{D} of said tail boom (10) and a fourth type of asymmetrical standard sections minimising said negative lift F_{D},
each standard section being defined by extreme characteristic points *A0, A1, A2, A3* and intermediate characteristic points *A01, A02, A11, A12, A21, A22, A31, A32,* said characteristic points being defined in a secondary frame of reference (U, V) attached to each standard section and defined by the directions of said chord c and of said maximum thickness *t,* a unit of the abscissa axis (U) and ordinate axis (V) being equal to said chord *c*, said extreme characteristic points *A0, A1, A2, A3* belonging to a contour of said standard section, *A0* being situated at said trailing edge and at coordinates [1, 0], *A2* being situated at the leading edge and at coordinates [0, 0], said extreme characteristic points *A1* and *A3* forming said maximum thickness t and having as ordinates -*t*/(2.*c)]* and *t*/*(*2.*c)*, respectively, said intermediate characteristic points *A01, A02, A11, A12, A21, A22, A31, A32* being points of construction of said contour of said standard section making it possible to define a direction of the contour of said section at each extreme characteristic point *A0, A1, A2, A3,* of which the abscissas in the secondary frame of reference (U, V) are identified by the letter u and the ordinates by the letter v, said standard sections being defined on the basis of the ratio t/c of said maximum thickness t of each standard section by said chord c of said standard section, said database comprising the following first table defining said characteristic points for said first type of symmetrical standard sections,
| t/c | uA1, uA3 | vA01 | uA02 | uA11 | vA12 | vA21 | uA22 | uA31 | vA32 |
|---|---|---|---|---|---|---|---|---|---|
| 50% | 0.75 | 0.8 | 0.15 | 0.8 | 0.15 | -0.15 | 0.8 | 0.15 | -0.8 |
| 60% | 0.77 | 0.8 | 0.15 | 0.8 | 0.15 | -0.15 | 0.8 | 0.15 | -0.8 |
| 70% | 0.85 | 0.8 | 0.15 | 0.8 | 0.15 | -0.15 | 0.8 | 0.15 | -0.8 |
| 80% | 0.85 | 0.8 | 0.15 | 0.8 | 0.15 | -0.15 | 0.8 | 0.15 | -0.8 |
| 90% to 130% | 0.85 | 0.8 | 0.15 | 0.8 | 0.15 | -0.15 | 0.8 | 0.15 | -0.8 |
said database comprising the following second table defining said characteristic points for said second type of asymmetrical standard sections, for a main rotor (3) rotating in the counter-clockwise direction in plan view,
| t/c | uA1, uA3 | vA01 | uA02 | uA11 | vA12 | vA21 | uA22 | uA31 | vA32 |
|---|---|---|---|---|---|---|---|---|---|
| 50% | 0.65 | 0.15 | 0.85 | 0.15 | 0.8 | -0.8 | 0.15 | 0.35 | -0.2 |
| 60% | 0.6 | 0.15 | 0.85 | 0.15 | 0.8 | -0.8 | 0.15 | 0.8 | -0.2 |
| 70% | 0.6 | 0.15 | 0.85 | 0.15 | 0.8 | -0.8 | 0.15 | 0.8 | -0.2 |
| 80% | 0.6 | 0.15 | 0.85 | 0.15 | 0.8 | -0.8 | 0.15 | 0.8 | -0.2 |
| 90% to 130% | 0.9 | 0.4 | 0.85 | 0.15 | 0.8 | -0.8 | 0.15 | 0.8 | -0.2 |
said database comprising the following third table defining said characteristic points for said third type of symmetrical standard sections,
| t/c | uA1, uA3 | vA01 | uA02 | uA11 | vA12 | vA21 | uA22 | uA31 | vA32 |
|---|---|---|---|---|---|---|---|---|---|
| 50% | 0.3 | 0.7 | 0.2 | 0.3 | 0.25 | -0.25 | 0.3 | 0.2 | -0.7 |
| 60% | 0.3 | 0.7 | 0.2 | 0.5 | 0.25 | -0.25 | 0.5 | 0.2 | -0.7 |
| 70% | 0.3 | 0.7 | 0.2 | 0.5 | 0.25 | -0.25 | 0.5 | 0.2 | -0.7 |
| 80% | 0.3 | 0.7 | 0.2 | 0.55 | 0.25 | -0.25 | 0.55 | 0.2 | -0.7 |
| 90% to 130% | 0.3 | 0.7 | 0.2 | 0.8 | 0.25 | -0.25 | 0.8 | 0.2 | -0.7 |
and said database comprising the following fourth table defining said characteristic points for said fourth type of asymmetrical standard sections, for a main rotor (3) rotating in the counter-clockwise direction in plan view,
| uA1, uA3 | vA01 | uA02 | uA11 | vA12 | vA21 | uA22 | uA31 | vA32 |
|---|---|---|---|---|---|---|---|---|
| 0.35 | 0.15 | 0.7 | 0.2 | 0.8 | -0.8 | 0.2 | 0.8 | -0.15 |
the ordinates of said intermediate characteristic points *A02, A11* being equal to the ordinate of said extreme characteristic point *A1,* the ordinates of said intermediate characteristic points *A22, A31* being equal to the ordinate of said extreme characteristic point *A3,* the abscissas of said intermediate characteristic points *A01, A32* being equal to the abscissa of said extreme characteristic point *A0* and the abscissas of said intermediate characteristic points *A12, A21* being equal to the abscissa of said extreme characteristic point *A2*,
- a step (102) of establishing desired aerodynamic and structural characteristics of said tail boom (10) in terms of lateral force F_{L} and negative lift force F_{D} generated by the air flow from the main rotor (3) circulating on said tail boom (10), and
- a step (103) of defining said sections of said tail boom (10) on the basis of said standard sections and of said desired aerodynamic and structural characteristics of said tail boom (10) in order to minimise said negative lift F_{D} and/or to maximise said lateral force F_{L} of said tail boom (10), each section of said tail boom (10) being formed by 4th order Bezier curves connecting said extreme characteristic points *A0, A1, A2, A3, A0* two by two, and constructed using said intermediate characteristic points *A01, A02, A11, A12, A21, A22, A31, A32.*

2. Method according to claim 1, wherein for said first type of symmetrical standard sections maximising said lateral force F_{L}, said maximum thickness *t* of a standard section is arranged downstream of the middle of said chord *c* of said standard section in the direction of flow of said air flow from said main rotor (3), for said second type of asymmetrical standard sections maximising said lateral force F_{L}, said maximum thickness *t* is arranged downstream of the middle of said chord *c* and close to said middle of said chord *c*, for said third type of symmetrical standard sections and said fourth type of asymmetrical standard sections minimising said negative lift F_{D}, said maximum thickness *t* is arranged upstream of said middle of said chord *c.*
